# EUROPEAN PATENT APPLICATION

(11) **EP 1 168 840 A2**
(43) Date of publication of application: **02.01.2002**
(21) Application number: 01305676.7
(22) Date of filing: 29.06.2001
(51) Int. Cl.: H04N 5/93

(54) **Method and apparatus for special video reproduction modes**

(30) Priority: 30.06.2000 JP 2000200220
(71) Applicant: KABUSHIKI KAISHA TOSHIBA, Kawasaki-shi, Kanagawa-ken 210-8572 (JP)
(72) Inventor: Hori, Osamu, c/o Intellectual Property Division, Minato-ku, Tokyo 105-8001 (JP); Kaneko, Toshimitsu, Intellectual Property Division, Minato-ku, Tokyo 105-8001 (JP); Mita, Takeshi, Intellectual Property Division, Minato-ku, Tokyo 105-8001 (JP); Yamamoto, Koji, Intellectual Property Division, Minato-ku, Tokyo 105-8001 (JP); Masukura, Koichi, c/o Intellectual Property Div., Minato-ku, Tokyo 105-8001 (JP)
(74) Representative: Midgley, Jonathan Lee

(57) **Abstract**

A special reproduction control information comprises plurality of items (100) of frame information. Each of the items of frame information comprises video location information (101) indicating the location of video data to be reproduced in a special reproduction and display time control information (102) indicating the time for displaying the video data.

## Description

The present invention relates to a special reproduction control information describing method for describing special reproduction control information used to perform special reproduction for target video contents, a special reproduction control information creating method for creating the special reproduction control information and a special reproduction control information creating apparatus and a video reproduction apparatus and method for performing special reproduction by using the special reproduction control information.

In recent years, a motion picture is compressed as a digital video and is stored in disk media represented by a DVD, and a HDD so that a video can be reproduced at random. A video can be reproduced halfway from a desired timing in the state of virtually no waiting time. As in conventional tape media, disk media can be fast reproduced at two to four times speed or can be reversely reproduced.

However, there is a problem in that the length of a video can be very long in many cases, and time cannot be sufficiently compressed to view the whole contents of the video even at two to four times fast reproduction. When the rate of the fast reproduction is increased, the scene change is enlarged to a degree exceeding the ability to view it, so that grasping the contents is difficult, and even portions which are not needed are also reproduced so that waste is caused.

Accordingly, the present invention is directed to method and apparatus that substantially obviates one or more of the problems due to limitations and disadvantages of the related art.

According to one aspect of the present invention, a method of describing frame information comprises:
describing, for a frame extracted from a plurality of frames in a source video data, first information specifying a location of the extracted frame in the source video data; and
describing, for the extracted frame, second information relating to a display time of the extracted frame.

According to another aspect of the present invention, an article of manufacture comprising a computer usable medium storing frame information, the frame information comprises:
first information, described for a frame extracted from a plurality of frames, specifying a location of the extracted frame in the source video data; and
second information, described for the extracted frame, relating to a display time of the extracted frame.

According to another aspect of the present invention, an apparatus for creating frame information comprises:
a unit configured to extract a frame from a plurality of frames in a source video data;
a unit configured to create the frame information including first information specifying a location of the extracted frame and second information relating to a display time of the extracted frame; and
a unit configured to link the extracted frame to the frame information.

According to another aspect of the present invention, a method of creating frame information comprises:
extracting a frame from a plurality of frames in a source video data; and
creating the frame information including first information specifying a location of the extracted frame in the source video data and second information relating to a display time of the extracted frame.

According to another aspect of the present invention, an apparatus for performing a special reproduction comprises:
a unit configured to refer to frame information described for a frame extracted from a plurality of frames in a source video data and including first information specifying a location of the extracted frame in the source video data and second information relating to a display time of the extracted frame;
a unit configured to obtain the video data corresponding to the extracted frame based on the first information;
a unit configured to determine the display time of the extracted frame based on the second information; and
a unit configured to display the obtained video data for the determined display time.

According to another aspect of the present invention, an article of manufacture comprising a method of performing a special reproduction comprises:
referring to frame information described for a frame extracted from a plurality of frames in a source video data and including first information specifying a location of the extracted frame and second information relating to a display time of the extracted frame;
obtaining the video data corresponding to the extracted frame based on the first information;
determining the display time of the extracted frame based on the second information; and
displaying the obtained video data for the determined display time.

According to another aspect of the present invention, an article of manufacture comprising an article of manufacture comprising a computer usable medium having computer readable program code means embodied therein, the computer readable program code means performing a special reproduction, the computer readable program code means comprises:
computer readable program code means for causing a computer to refer to frame information described for a frame extracted from a plurality of frames in a source video data and including first information specifying a location of the extracted frame and second information relating to a display time of the extracted frame;
computer readable program code means for causing a computer to obtain the video data corresponding to the extracted frame based on the first information;
computer readable program code means for causing a computer to determine the display time of the extracted frame based on the second information; and
computer readable program code means for causing a computer to display the obtained video data for the determined display time.

According to another aspect of the present invention, an article of manufacture comprising a method of describing sound information, the method comprises:
describing, for a frame extracted from a plurality of sound frames in a source sound data, first information specifying a location of the extracted frame in the source sound data; and
describing, for the extracted frame, second information relating to a reproduction start time and reproduction time of the sound data of the extracted frame.

According to another aspect of the present invention, an article of manufacture comprising an article of manufacture comprising a computer usable medium storing frame information, the frame information comprises:
first information, described for a frame extracted from a plurality of sound frames, specifying a location of the extracted frame in the source sound data; and
second information, described for the extracted frame, relating to a reproduction start time and reproduction time of the sound data of the extracted frame.

According to another aspect of the present invention, an article of manufacture comprising a method of describing text information, the method comprises:
describing, for a frame extracted from a plurality of text frames in a source text data, first information specifying a location of the extracted frame in the source text data; and
describing, for the extracted frame, second information relating to a display start time and display time of the text data of the extracted frame.

According to another aspect of the present invention, an article of manufacture comprising an article of manufacture comprising a computer usable medium storing frame information, the frame information comprises:
first information, described for a frame extracted from a plurality of text frames in a source text data, specifying a location of the extracted frame in the source text data; and
second information, described for the extracted frame, relating to a display start time and display time of the text data of the extracted frame.

This summary of the invention does not necessarily describe all necessary features so that the invention may also be a sub-combination of these described features.

The present invention can be implemented either in hardware or on software in a general purpose computer. Further the present invention can be implemented in a combination of hardware and software. The present invention can also be implemented by a single processing apparatus or a distributed network of processing apparatuses.

Since the present invention can be implemented by software, the present invention encompasses computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal.

The invention can be more fully understood from the following detailed description when taken in conjunction with the accompanying drawings, in which:
FIG. 1 is a view showing an example of a data structure of special reproduction control information according to one embodiment of the present invention;
FIG. 2 is a view showing an example of a structure of a special reproduction control information creating apparatus;
FIG. 3 is a view showing another example of structure of the special reproduction control information creating apparatus;
FIG. 4 is a flowchart showing one example for the apparatus shown in FIG. 2;
FIG. 5 is a flowchart showing one example for the apparatus shown in FIG. 3;
FIG. 6 is a view showing an example of a structure of a video reproduction apparatus;
FIG. 7 is a flowchart showing one example for the apparatus shown in FIG. 6;
FIG. 8 is a view showing an example of a data structure of special reproduction control information;
FIG. 9 is a view explaining video location information for referring to an original video frame;
FIG. 10 is a view explaining video location information for referring to a image data file;
FIG. 11 is a view explaining a method for extracting video data in accordance with a motion of a screen;
FIG. 12 is a view explaining video location information for referring to the original video frame;
FIG. 13 is a view for explaining video location information for referring to the image data file;
FIG. 14 is a view showing an example of a data structure of special reproduction control information in which plural original video frames are referred to;
FIG. 15 is a view explaining a relation between the video location information and the original plural video frames;
FIG. 16 is a view explaining a relation between the image data file and the original plural video frames;
FIG. 17 is a view explaining video location information for referring to the original video frame;
FIG. 18 is a view for explaining video location information for referring to the image data file;
FIG. 19 is a flow chart for explaining a special reproduction;
FIG. 20 is a view for explaining a method for extracting video data in accordance with a motion of a screen;
FIG. 21 is a view for explaining a method for extracting video data in accordance with a motion of a screen;
FIG. 22 is a flowchart showing one example for calculating display time at which a scene change quantity becomes constant as much as possible;
FIG. 23 is a flowchart showing one example for calculating a scene change quantity of the whole frame from an MPEG video;
FIG. 24 is a view for explaining a method for calculating a scene change quantity of a video from an MPEG stream;
FIG. 25 is a view for explaining a processing procedure for calculating display time at which a scene change quantity becomes constant as much as possible;
FIG. 26 is a flowchart showing one example of the processing procedure for conducting special reproduction on the basis of special reproduction control information;
FIG. 27 is a flowchart showing one example for conducting special reproduction on the basis of a display cycle;
FIG. 28 is a view for explaining a relationship between a calculated display time and the display cycle;
FIG. 29 is a view for explaining a relationship between a calculated display time and the display cycle;
FIG. 30 is a view showing another example of a data structure of special reproduction control information;
FIG. 31 is a view explaining a method for extracting video data in accordance with a motion of a screen;
FIG. 32 is a view explaining video location information for referring to the original video frame;
FIG. 33 is a view showing another example of a data structure of special reproduction control information;
FIG. 34 is a view showing another example of a data structure of special reproduction control information;
FIG. 35 is a view showing another example of a data structure of special reproduction control information;
FIG. 36 is a flowchart showing one example for calculating display time from the importance;
FIG. 37 is a view for explaining a method for calculating display time from the importance;
FIG. 38 is a flowchart showing one example for calculating importance data on the basis of the idea that a scene having a large sound level is important;
FIG. 39 is a flowchart showing one example for calculating importance data on the basis of the idea that a scene on which many important words appear with sound recognition is important, or a processing procedure for calculating importance data on the basis of the idea that the scene in which the number of words talked per time is many is important;
FIG. 40 is a flowchart showing one example for calculating importance data on the basis of the idea that a scene on which many important words appear with telop recognition is important, or a processing procedure for calculating importance data on the basis of the idea that the scene in which the number of words included in the telop which appears per time is large with telop recognition is important;
FIG. 41 is a flowchart showing one example for calculating importance data on the basis of the idea that the scene in which a large character appears as a telop is important;
FIG. 42 is a flowchart showing one example for calculating importance data on the basis of the idea that the scene in which many human faces appear is important or a processing for calculating importance data on the basis of the idea that the scene where human faces are displayed in an enlarged manner is important;
FIG. 43 is a flowchart showing one example for calculating importance data on the basis of the idea that the scene in which videos similar to the registered important scene appear is important;
FIG. 44 is a view showing another example of a data structure of special reproduction control information;
FIG. 45 is a view showing another example of a data structure of special reproduction control information;
FIG. 46 is a view showing another example of a data structure of special reproduction control information;
FIG. 47 is a view for explaining a relationship between information as to whether the scene is to be reproduced or not and the reproduced video;
FIG. 48 is a flowchart showing one example of a processing procedure of special reproduction including reproduction and non-reproduction judgment;
FIG. 49 is a view showing one example of a data structure when sound information or text information is added;
FIG. 50 is a view showing one example of a data structure for describing only sound information separately from frame information;
FIG. 51 is a view showing one example of a data structure for describing only text information separately from frame information;
FIG. 52 is a view for explaining a synchronization of a reproduction of each of media;
FIG. 53 is a flowchart showing one example of a determination procedure of a sound reproduction start time and a sound reproduction time in a video frame section;
FIG. 54 is a flowchart showing one example for preparing reproduction sound data and correcting video frame display time;
FIG. 55 is a flowchart showing one example of a processing procedure of obtaining text information with telop recognition;
FIG. 56 is a flowchart showing one example of a processing procedure of obtaining text information with sound recognition;
FIG. 57 is a flowchart showing one example of a processing procedure of preparing text information;
FIGS. 58A and 58B are views for explaining a method of displaying text information;
FIG. 59 is a view showing one example of a data structure of special reproduction control information for sound information;
FIG. 60 is a view showing another example of a data structure of special reproduction control information for sound information;
FIG. 61 is a view explaining a summary reproduction of the sound/music data; and
FIG. 62 is a view explaining another summary reproduction of the sound/music data.

Preferred embodiments of the present invention will now be described with reference to the accompanying drawings.

The embodiments relate to a reproduction of video contents having video data using special reproduction control information. The video data comprises a set of video frames (video frame group) constituting a motion picture.

The special reproduction control information is created from the video data by a special reproduction control information creating apparatus and attached to the video data. The special reproduction is reproduction by a method other than a normal reproduction. The special reproduction includes a double speed reproduction (or a high speed reproduction), jump reproduction (or jump continuous reproduction), and a trick reproduction. The trick reproduction includes a substituted reproduction, an overlapped reproduction, a slow reproduction and the like. The special reproduction control information is referred to when the special reproduction is executed in the video reproduction apparatus.

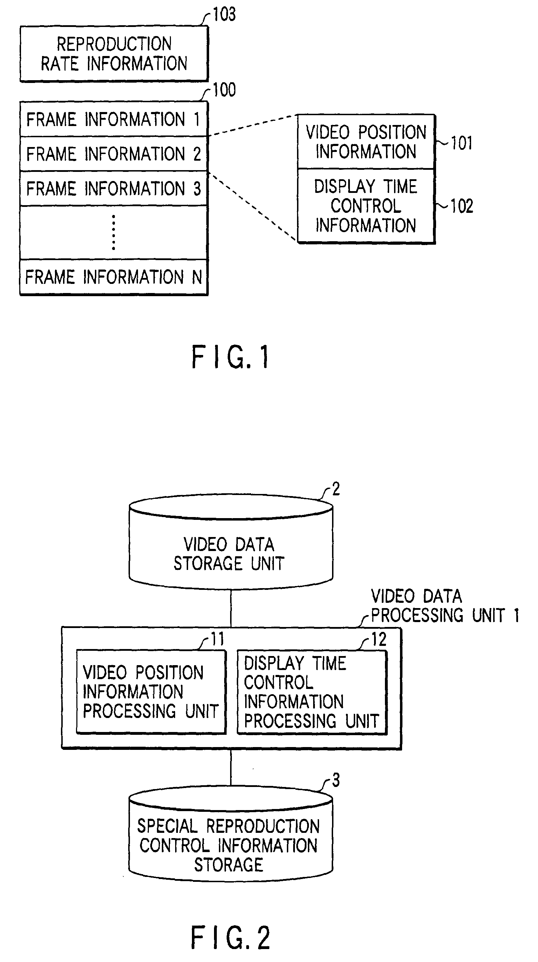

FIG. 1 shows one example of a basic data structure of the special reproduction control information.

In this data structure, plural items of frame information "i" (i = 1 to N) are described in correspondence to the frame appearance order in the video data. Each frame information 100 includes a set of video location information 101 and display time control information 102. The video location information 101 indicates a location of video data to be displayed at the time of special reproduction. The video data to be display may be one frame, a group of a plurality of continuous frames, or a group formed of a part of a plurality of continuous frames. The display time control information 102 forms the basis of calculating the display time of the video data.

In FIG. 1, the frame information "i" is arranged in an order of the appearance of frames in the video data. When information indicating an order of frame information is described in the frame information "i", the frame information "i" may be arranged and described in any order.

The reproduction rate information 103 attached to a plurality of items of frame information "i" shows the reproduction speed rate and is used for designating the reproduction at a speed several times higher than that corresponding to the display time as described by the display time control information 102. However, the reproduction rate information 103 is not essential information. The information 103 may constantly be attached, not constantly be attached, or selectively attached. Even when the reproduction rate information 103 is attached, the information may not be used at the time of special reproduction. The reproduction rate information may constantly be used, may not constantly used, or is selectively used.

In FIG. 1, it is possible to further add other control information to the frame information group together with the reproduction rate information or in place of the reproduction rate information. In FIG. 1, it is also possible to add different control information to each frame information "i". In these cases, each information included in the special reproduction control information may be all used on the side of the video reproduction device, or a part of the information may be used.

FIG. 2 shows an example of a structure of an apparatus for creating special reproduction control information.

This special reproduction control information creating device comprises a video data storage unit 2, a video data processing unit 1 including a video location information processing unit 11 and a display time control information processing unit 12, and a special reproduction control information storage unit 3. In detail, as will be described later, since the video data (encoded data) is decoded to be video data before displaying, it takes a processing time required for decoding the video data from the display instruction is issued until the video is displayed. In order to extracted this processing time, it is proposed to decode the video data beforehand and store an image data file.

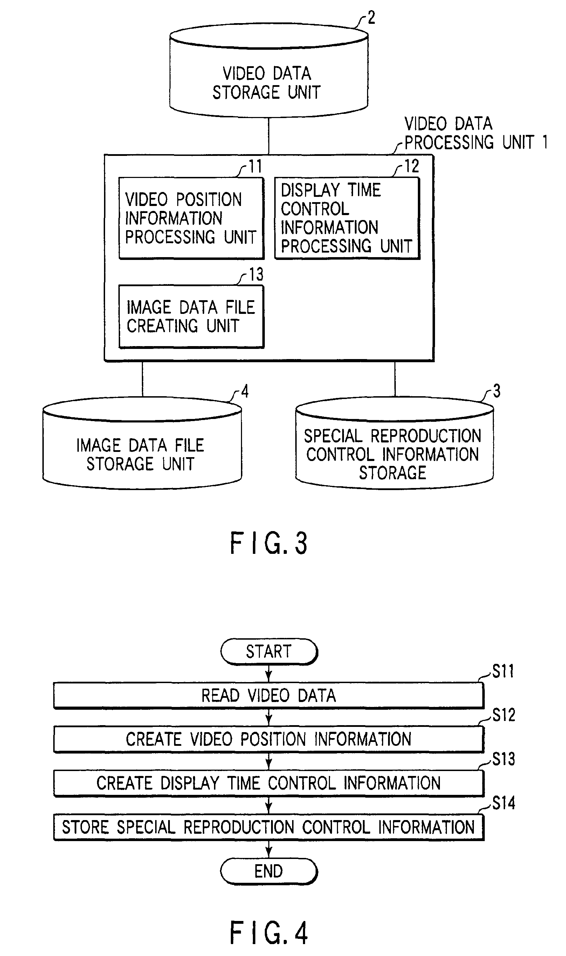

If an image data file is used (the image data file may be constantly used, or the image data file is selectively used), an image data file creating unit 13 (in the video data processing unit 1) and an image data file storage unit 14 are further provided as shown in FIG. 3. If other control information is added which is determined on the basis of the video data to the special reproduction control information, the corresponding function is appropriately added to the inside of the video data processing unit 1.

If an operation by a user is intervened in this processing, a GUI is used for displaying, for example, video data in frame units, and providing a function of receiving an input of an instruction by the user though omitted in FIGS. 2 and 3.

In FIGS. 2 and 3, a CPU, a memory, an external storage device, and a network communication device is provided when needed, and software such as driver software used when needed and an OS are not shown.

The video data storage unit 2 stores video data which becomes an target of processing for creating special reproduction control information (or special reproduction control information and image data files).

The special reproduction control information storage unit 3 stores special reproduction control information that has been created.

The image data file storage unit 4 stores image data files that have been created.

The storage units 2, 3, and 4 comprise, for example, a hard disk, an optical disk and a semiconductor memory. The storage units 2, 3, and 4 may comprise separate storage devices. All or part of the storage units may comprise the same storage device.

The video data processing unit 1 creates the special reproduction control information (or the special reproduction control information and image data file) on the basis of the video data which becomes an target of processing.

The video location information processing unit 11 determines (extracts) a video frame (group) which should be displayed or which can be displayed at the time of special reproduction to conduct processing of preparing the video location information 101 which should be described in each frame information "i".

The display time control information processing unit 102 conducts a processing for preparing the display time control information 102 associated with the display time of the video frame (group) associated with each frame information "i".

The image data file creating unit 13 conducts a processing for preparing an image data file from the video data.

The special reproduction control information creating apparatus can be realized, for example, in a form of conducting software on a computer. The apparatus may be realized as a dedicated apparatus for creating the special reproduction control information.

FIG. 4 shows an example of a processing procedure in a case of a structure of FIG. 2. The video data is read (step S11), video location information 101 is created (step S12), display time control information 102 is created (step S13), and special reproduction control information is stored (step S14). The procedure of FIG. 4 may be consecutively conducted for each frame information, and each processing may be conducted in batches. The other procedures can also be conducted.

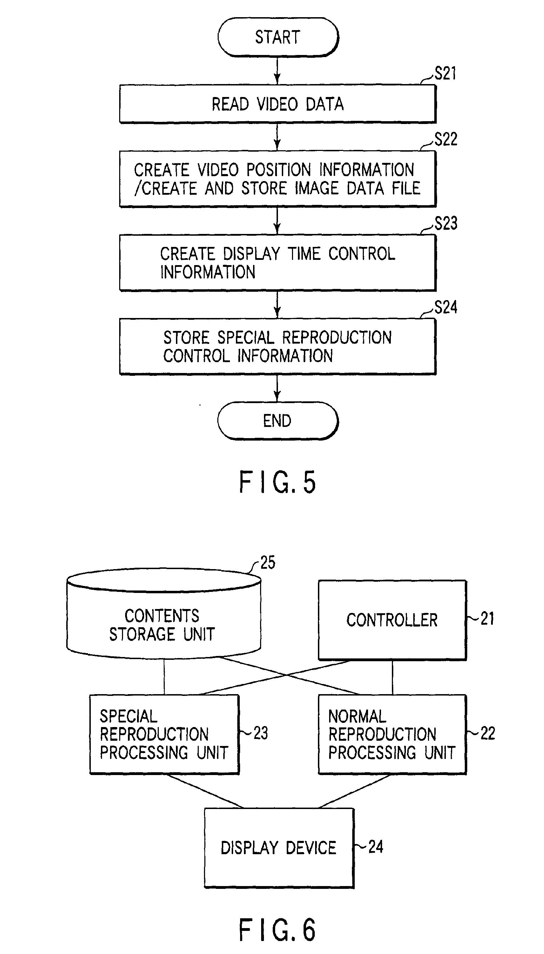

FIG. 5 shows an example of a processing procedure in a case of the structure of FIG. 3. A procedure for preparing and storing image data files is added to a procedure of FIG. 4 (step S22). The image data file is created and/or stored together with the preparation of the video location information 101. It is also possible to create the video location information 101 at a timing different from that of FIG. 4. In the same manner as the case of FIG. 4, the procedure of FIG. 5 may be conducted for each frame information, or may be conducted in batches. The other procedures can also be conducted.

FIG. 6 shows an example of a video reproduction apparatus.

This video reproduction apparatus comprises a controller 21, a normal reproduction processing unit 22, a special reproduction processing unit 23, a display device 24, and a contents storage unit 25. If contents are handled wherein audio such as sound or the like is added to the video data, it is preferable to provide a sound output section. If contents are handled wherein text data is added to the video data, the text may be displayed on the display device 24, or may be output from the sound output section. If contents are handled wherein a program is attached, an attached program execution section may be provided.

The contents storage unit 25 stores at least video data and special reproduction control information. In detail, as will be described later, in the case where the image data file is used, the image data file is further stored. The sound data, the text data, and the attached program are further stored in some cases.

The contents storage unit 25 may be arranged at one location in a concentrated manner, or may be arranged in a distributed manner. The point is that the contents can be accessed with the normal reproduction processing unit 22 and special reproduction processing unit 23. The video data, special reproduction control information, image data files, sound data, text data, and attached program may be stored in separate media or may be stored in the same medium. As the medium, for example, DVD is used. These may be data which are transmitted via a network.

The controller 21 basically receives an instruction such as a normal reproduction and a special reproduction with respect to the contents from the user via a user interface such as a GUI or the like. The controller 21 controls for giving to the corresponding processing unit an instruction of reproduction by means of a method designated with respect to the designated contents.

The normal reproduction processing unit 22 is used for the normal reproduction of the designated contents.

The special reproduction processing unit 23 is used for the special reproduction (for example, a high speed reproduction, jump reproduction, trick reproduction, or the like) of the designated contents by referring to the special reproduction control information.

The display device 24 is used for displaying a video.

The video reproduction apparatus can be realized by computer software. It may partially be realized by hardware (for example, decode board (MPEG-2 decoder) or the like). The video reproduction apparatus may be realized as a dedicated device for video reproduction.

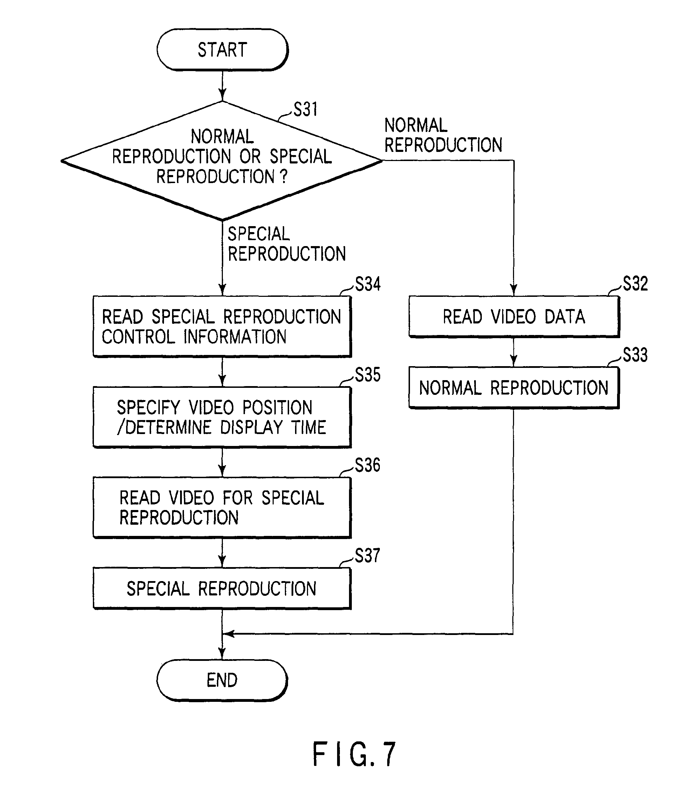

FIG. 7 shows one example of a reproduction processing procedure of the video reproduction apparatus of FIG. 6. At step S31, it is determined whether user requests a normal reproduction or a special reproduction. When a normal reproduction is requested, the designated video data is read at step S32 and a normal reproduction is conducted at step S33. When a special reproduction is requested from the user, the special reproduction control information corresponding to the designated video data is read at step S34, the location of the video data to be displayed is specified and the display time is determined at step S35. The corresponding frame (group) is read from the video data (or the image data file) at step S36 to conduct special reproduction of the designated contents at step S37. The location of the video data can be specified and the display time can be determined at a timing different from that in FIG. 7. The procedure of the special reproduction of FIG. 7 may be consecutively conducted for each frame information, or each processing may be conducted in batches. Other procedures can be conducted. For example, in the case of the reproduction method in which the display time of each frame is equally set to a constant value, it is not necessary to determine the display time.

Both in the normal reproduction and in the special reproduction, the user may demand various designations (for example, the start point of the reproduction or the end point of the reproduction in the contents, a reproduction speed in the high speed reproduction, and reproduction time in the high speed reproduction, and other method, such as special reproduction or the like).

Next, an algorithm for creating the frame information of the special reproduction control information and an algorithm for calculating the display time of the special reproduction will be schematically explained.

At the time of creating the frame information, the frame information to be used at the time of the special reproduction is determined from the video data, the video location information is created, and the display time control information is created.

The frame is determined by such methods as; 1) a method for calculating the video frame on the basis of some characteristic quantity with respect to the video data (for example, a method for extracting the video frames such that the total of characteristic quantity (for example, the scene change quantity) between the extracted frames becomes constant and a method for extracting the video frames such that the total of importance between the extracted frames becomes constant), and (2) a method for calculating the video frame on a fixed standard (for example, a method for extracting frames at random, and a method for extracting frames at an equal interval). The scene change quantity is also called as a frame activity value.

In the creation of the display time control information 121, there are available; (i) a method for calculating an absolute value or a relative value of the display time or a display frame number, (ii) a method for calculating reference information which is a base of the display time and a display frame number (for example, the information designated by the user, characters in the video, sound synchronized with video, and persons in the video, and the importance obtained on the basis of the specific pattern in the video), (iii) a method for describing both (i) and (ii).

It is possible to appropriately combine (1) or (2) and (i), (ii) or (iii). Needless to say, other methods can be possible. One specific combination out of such methods can be used, and a plurality of combinations of these methods may be used and can be appropriately selected.

In a specific case, at the same time with the determination of the frame at the method (1), a relative value of the display time and the number of display frames are determined. If this method is constantly used, it is possible to omit the display time control information processing unit 102.

At the time of the special reproduction, it is assumed that the special reproduction is conducted by referring to the display time control information 121 of (i), (ii) or (iii) included in the frame information. However, the described value may be followed or the described value may be corrected and used. In addition to the described value and the corrected value thereof, independently created other information, and information input from the user may be used. Alternatively, only the independently created other information and the information input from the user may be used. A plurality of methods out of these methods are enabled and can be appropriately selected.

Next, an outline of the special reproduction will be explained.

A double speed reproduction (or a high speed reproduction) carries out reproduction in a time shorter than the time required for the normal reproduction of the original contents by reproducing a part of the frames out of the whole frames constituting the video data contents. For example, the frames indicated by the frame information are displayed for each display time indicated by the display time control information 121, in the order of time sequence. Based on a request from the user, such as a speed designation request for designating at what times speed of the normal reproduction the original contents are reproduced (in what factor of the time required for the normal reproduction the original contents are reproduced) and a time designation request for designating how much time is taken for reproducing the contents, the display time of each frame (group) is determined to satisfy the reproduction request. The high speed reproduction is called a summarized reproduction.

A jump reproduction (or a jump continuous reproduction) is such that a part of the frame shown in the frame information is subjected to non-reproduction, for example, on the basis of the reproduction/non-reproduction information described later in the high speed reproduction. The high speed reproduction is conducted with respect to the frame excluding the frame which is subjected to non-reproduction out of the frames shown in shown in the frame information.

A trick reproduction excludes from the reproduction except for the normal reproduction the high speed reproduction and the jump reproduction. For example, at the time of reproducing the frame shown in the frame information, there can be considered various forms such as a substituted reproduction for reproducing a certain portion by replacing the order of time sequence, an overlapped reproduction for reproducing a certain portion repeatedly a plurality of times at the time of reproducing the frame shown in frame information, a variable speed reproduction in which at the time of reproducing the frame shown in the frame information, a certain portion is reproduced at a speed lower than the reproduction of another portion (including the case in which the portion is reproduced at the speed of normal reproduction, or the case in which the portion is reproduced at a speed lower than the normal reproduction time) or at a speed higher than another portion, or the reproduction of a certain portion is temporarily suspended, or such forms of reproduction are appropriately combined, a random reproduction for reproducing at a random time sequence for each of a constant set of frames shown in the frame information.

Needless to say, it is possible to appropriately combine a plurality of kinds of methods. For example, at the time of the double speed, the important portion is reproduced a plurality of times, and various variations are considered such as a method for setting a reproduction speed to a normal reproduction speed.

Hereinafter, embodiments of the present invention will be specifically explained in detail.

In the beginning, the embodiments will be explained by taking as an example a case in which a reproduction frame is determined on the basis of the scene change quantity between adjacent frames as the characteristic quantity of the video data.

Here, there will be explained a case in which one frame is corresponded to one frame information.

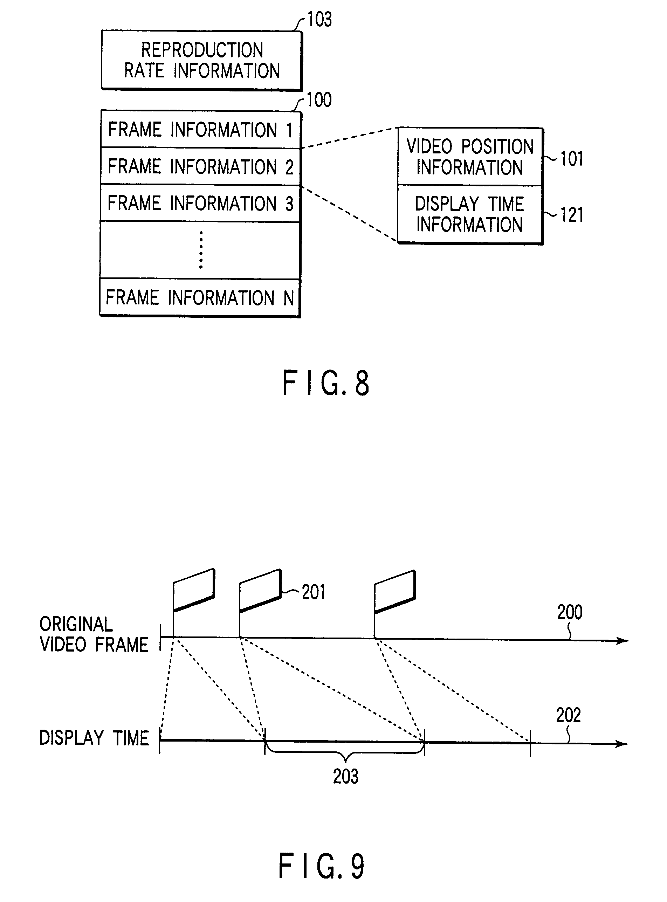

FIG. 8 shows one example of a data structure of the special reproduction control information created under the target video data.

The data structure is such that the display time information 121 is described which is information showing an absolute or a relative display time as display time control information 102 in FIG. 1 (or instead of the display time control information 102). A structure describing the importance in addition to the display time control information 102 will be described later.

The video location information 101 is information which enables the specification of the location in the original video frame of the video, and any of a frame number (for example, a sequence number from the first frame) or a number which specifies one frame in a stream like a time stamp may be used. If the video data corresponding to the frame extracted from the original video stream is set as a separate frame, a URL or the like may be used as information for specifying the file location.

The display time information 121 is information which specifies the time for displaying the video or the number of frames. It is possible to describe actual time or the number of frames as a unit and a relative value (for example, a normalized numeric value) which clarifies a relationship of the relative time length with the display time information described in other frame information. In the latter case, the actual reproduction time of each video is calculated from the total reproduction time as a whole. With respect to each video, the continuation time of the display is not described, but such description with a combination of a start time starting from a specific timing (for example, the start time of the first video is set to 0), and the end time and a description with a combination of the start time and the continuation time may be used.

In the special reproduction, basically the reproduction of the video present at a location specified with the video location information 101 only for the display time specified with the display time information 121 is consecutively conducted only for the number of the items of frame information "i" included in the arrangement, such as shown in FIG. 8.

If the start time and the end time or the continuation time are specified and this designation is followed, the video present at the location specified with the video location information 101 is consecutively reproduced from the start time specified with the display time information 121 up to the end time or during the continuation time only for the number of items of the frame information "i" included in the arrangement.

The described display time can be processed and reproduced by using parameters such as reproduction rata information and additional information.

Next, a method for describing the video location information will be explained by using FIGS. 9 through 11.

FIG. 9 explains a method for describing the video location information referring to the original video frame.

In FIG. 9, a time axis 200 corresponds to the original video stream based on which the frame information for the special reproduction is created and a video 201 corresponds to one frame which becomes a description target in the video stream. A time axis 202 corresponds to reproduction time of a video at the time of the special reproduction by using the video 201 extracted from the original video stream. A display time 203 is a section corresponding to one video 201 included in the display time 203. For example, the video location information 101 showing the location of the video 201 and the video display time 121 showing the length of the display time 203 are described as frame information. As described above, the description on the location of the video 201 may be given in any form such as a frame number, a time stamp or the like as long as one frame in the original video stream can be specified. This frame information will be described in the same manner with respect to the other videos 201.

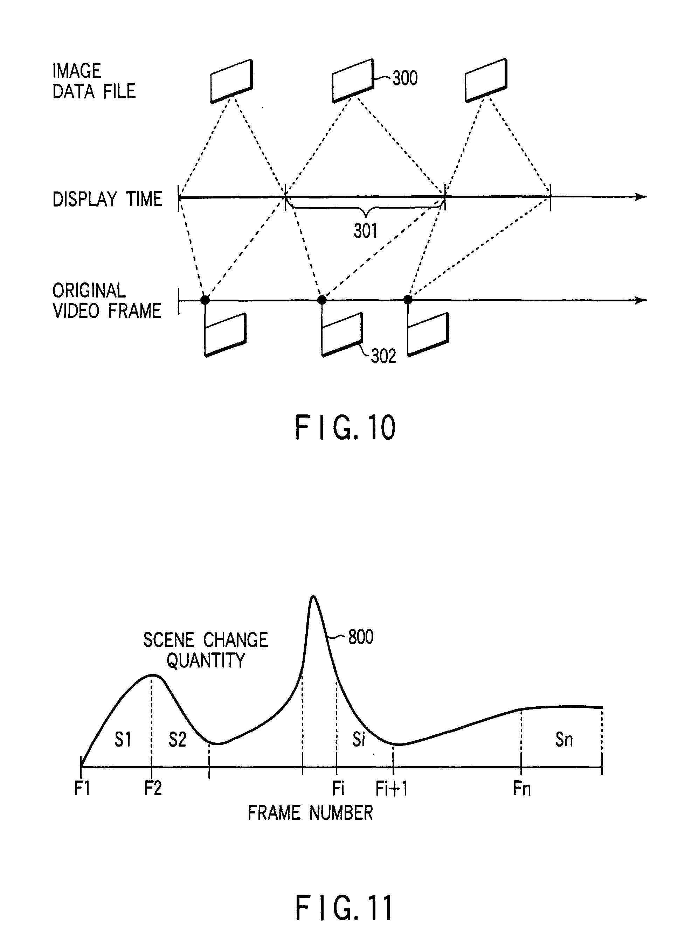

FIG. 10 explains a method for describing the video location information referring to the image data file.

The method for describing the video location information shown in FIG. 9 directly refers to the frame in the original data frame which is to be subjected to the special reproduction. The method for describing the video location information shown in FIG. 10 is a method in which an image data file 300 corresponding to a single frame 302 extracted from the original video stream is created in a separate file, and the location thereof is described. A method for describing the file location can be handled in the same manner by using, for example, the URL or the like both in the case where the file is present on a local storage device and in the case where the file is present on the network. A set of the video location information 101 showing the location of this image data file and the video display time 121 showing the length of the corresponding display time 301 is described as frame information.

If a correspondence to the original video frame is required, the information (similar to the video location information in the case of, for example, FIG. 9) showing a single frame 302 of the original video corresponding to the described frame information may be included in the frame information. The frame information may comprise the video location information, the display time information and the original video information. When the original video information is not required, it is not required to describe the original video.

The configuration of the video data described with the method of FIG. 10 is not particularly restricted. For example, the frame of the original video may be used as it is or may be reduced. This is effective for conducting a reproduction processing at a high speed because it is not required to develop the original video.

If the original video stream is compressed by means of MPEG-1 or MPEG-2 or the like, a reduced video can be created at a high speed only by partially decoding the streams. In this method, only the DCT (the discrete cosine conversion) coefficients of an I picture frame encoded within the frame (an inner-frame encoded frame) is decoded and a reduced video is created by using the DCT coefficients.

In the description method of FIG. 10, the image data files are stored in separate files. However, these files may be stored in a package in a video data group storage file having a video format (for example, a motion JPEG) which can be accessed at random. The location of the video data is specified by a combination of the URL showing the location of the image data file, a frame number or a time stamp showing the location in the image data file. The URL information showing the location of the image data file may be described in each frame information or may be described as additional information outside of the arrangement of the frame information.

Various methods can be taken to select the frame of the original video or the like and create the video data to describe the video location information. For example, the video data may be extracted at an equal interval from the original video. Where the motion of the screen quite often appears, the video data is selected in a narrow interval. Where the motion of the screen quite rarely appears, the video frame is selected in a wide interval.

Here, referring to FIG. 11, there will be explained a method in which as one example of a method for selecting frames, the frame is selected in a narrow interval where the motion of the screen quite often appears while the frame is selected in a wide interval where the motion of the screen rarely appears.

In FIG. 11, a horizontal axis represents the selected frame number, and a curve 800 represents a change in the scene change quantity (between adjacent frames). A method for calculating the scene change quantity is the same as a method at the time of calculating the display time described later. Here, in order to determine an extraction interval in accordance with the motion of the scene, there is shown a method for calculating an interval at which the scene change quantity between video frames from which the video data is extracted becomes constant. The total of the scene change quantity between video frames from which the video data is extracted is set to Sᵢ, and the total of the scene change quantity in the whole frame is set to S (= ΣSᵢ) while the number of data items to be extracted is n. In order to set the video change quantity between video frames from which video data is extracted to a constant level, Sᵢ = S/n may be provided. In FIG. 11, the area Sᵢ of the scene change quantity curve 800 divided with the broken lines becomes constant. Then, for example, the scene change quantity is accumulated from the extracted frame, so that the video frame having the value exceeding the S/n is set as the frame Fᵢ from which the video data is extracted.

If the video data is created by I picture frame of MPEG, the video frame from which the calculated video data is created is not necessarily the I picture, the video data is created from the I picture frame in the vicinity thereof.

By the way, in the method explained in FIG. 11, the video frame which belongs to the section of the scene change quantity = 0 is skipped. However, if a still picture continues, the scene is important in many cases. Then, if the scene change quantity = 0 continues for more than a constant time, the frame at that time may be extracted. For example, the scene change quantity may be accumulated from the extracted frame so that the frame having the value exceeding S/n or the frame at which the scene change quantity = 0 continues for more than a constant time may be set as a frame Fᵢ from which the video data is extracted. The accumulated value of the scene change quantity may be or may not be cleared to 0. It is possible to selectively clear the accumulated value based on a request from the user.

In the case of an example of FIG. 11, it is assumed that the display time information 121 is described so that the display time becomes the same with respect to any of the frames. When the video is reproduced in accordance with this display time information 121, the scene change quantity becomes constant. The display time information 121 may be determined and described in a separate method.

Next, there will be explained a case in which one or a plurality of frames are allowed to correspond to one frame information.

One example of the data structure of the special reproduction information in this case is the same as that in FIG. 8.

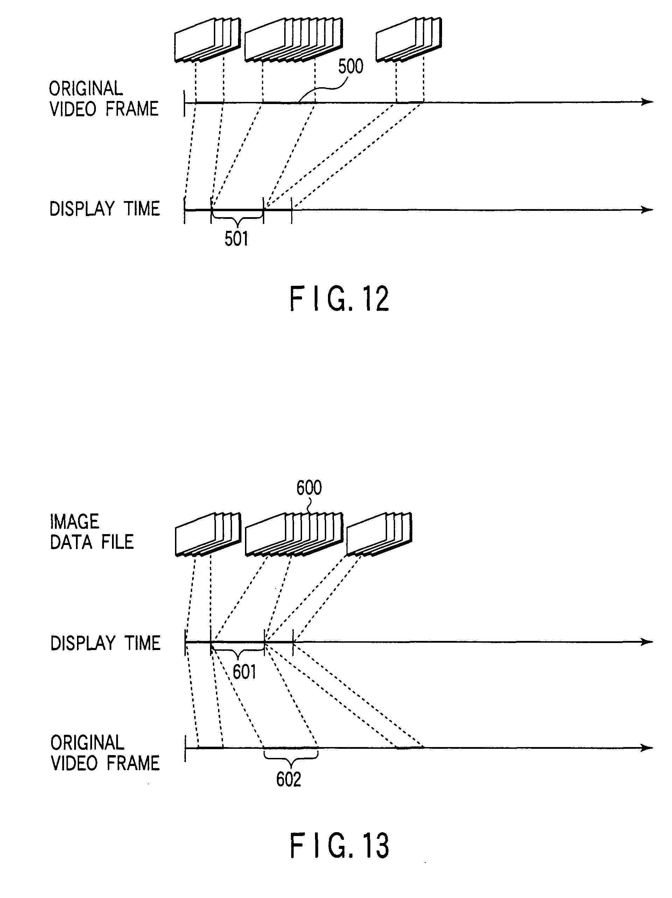

Hereinafter, a method for describing the video location information will be explained by using FIGS. 12 through 14.

FIG. 12 explains a method for describing the video location information for referring to the continuous frames of the original video.

A method for describing the video location information shown in FIG. 9 refers to one frame 201 in one original video for conducting the special reproduction. However, the method for describing the video location information shown in FIG. 12 describes a set 500 of a plurality of continuous frames in the original video. The set 500 of frames may include some frames extracted from the plural continuous frames within the original video. The set 500 of frames may include only one frame.

If the set 500 of frames includes a plurality of continuous frames or one frame in the original video, the location of the start frame and the location of the end frame are described, or the location of the start frame and the continuation time of the set 500 are described in the description of the frame location (if one frame is included, for example, the start frame is set equal to the end frame). In the description of the location and the time, the frame number and the time stamp and the like are used which can specify frames in the streams.

If the set 500 of frames is a part out of a plurality of continuous frames in the original video, information is described which enables the specification of the frames. If the method for extracting the frames is determined, and the specification of the frames can be specified with the description of the locations of the start frame and the end frame, the start frame or the end frame may be described.

The display time information 501 shows the total display time corresponding to the whole frame group included in the corresponding frame set 500. The display time of each frame included in the set 500 of frames can be appropriately determined on the side of device for the special reproduction. As a simple method, there is available a method in which the above total display time is equally divided with the total number of frames in the set 500 to provide one frame display time. Various other methods are available.

FIG. 13 explains a method for describing video location information for referring to a set of the image data files.

The method for describing the video location information shown in FIG. 12 directly refers to continuous frames in the original video to be reproduced. A method for describing the video location information shown in FIG. 13 creates a set 600 of the image data files corresponding to the original video frame set 602 extracted from the original video stream in a separate file and describes the location thereof. In the method for describing the file location, the file can be handled in the same manner by using, for example, URL or the like, even if the file is present on a local storage device or if the file is present on a network. A set of the video location information 101 showing the location of this image data file and the video display time 121 showing a length of the corresponding display time 601 can be described as the frame information.

If a correspondence with the original frame is required, information showing the frame set 602 of the original video corresponding to the described frame information (for example, information similar to the video location information in the case of FIG. 12) may be included in the frame information. The frame information may comprise the video location information, the display time information and the original video information. The original video information is not required to be described when the information is not required.

The configuration of the video data, the preparation of the video data, the preparation of the reduced video, the method for storing the video data and the method for describing the location information such as the URL or the like are the same as what has been described above.

Various methods can be adopted in the same manner as described above as to which frame of the original video is selected to create the video data to be described in the video location information. For example, the video data may be extracted at an equal interval from the original video. Where a motion of the screen quite often appears, a frame is extracted in a narrow interval. Where the motion of the screen rarely appears, a frame is extracted in a wide interval.

In the above embodiments, the image data file 300 is corresponded to the original video 302 in a frame to frame manner. It is possible to make the location information of the frame described as the original video information have a time width.

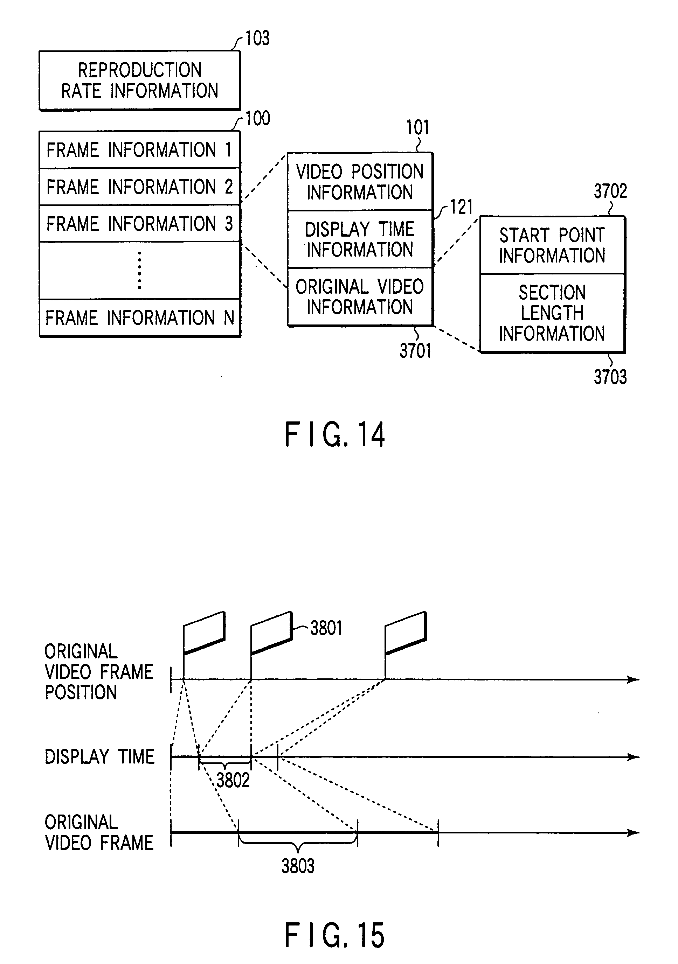

FIG. 14 shows an example in which the original video information is allowed to have a time width with respect to the FIG. 8. An original video information 3701 is added to the frame information structure shown in FIG. 8. The original video information 3701 comprises a start point information 3702 and a section length information 3703 which are the start point and the section length of the original video which is a target of the special reproduction. The original video information 3701 comprises any information which can specify the section of the original video having the time width. It may comprise the start point information and an end point information in stead of the start point information and the length information.

FIG. 15 shows an example in which the original video information is allowed to have a time width with respect to the FIG. 9. In this case, for example, as video location information, display time information and original video information included in the same frame information, the location of the original video frame 3801, the display time 3802, and the original video frame section 3803 which comprises the start point (frame location) and the section length are described to show that these correspond to each other. That is, as a video representative of the original video frame section 3803, the original video frame location 3801 described in the video location information is displayed.

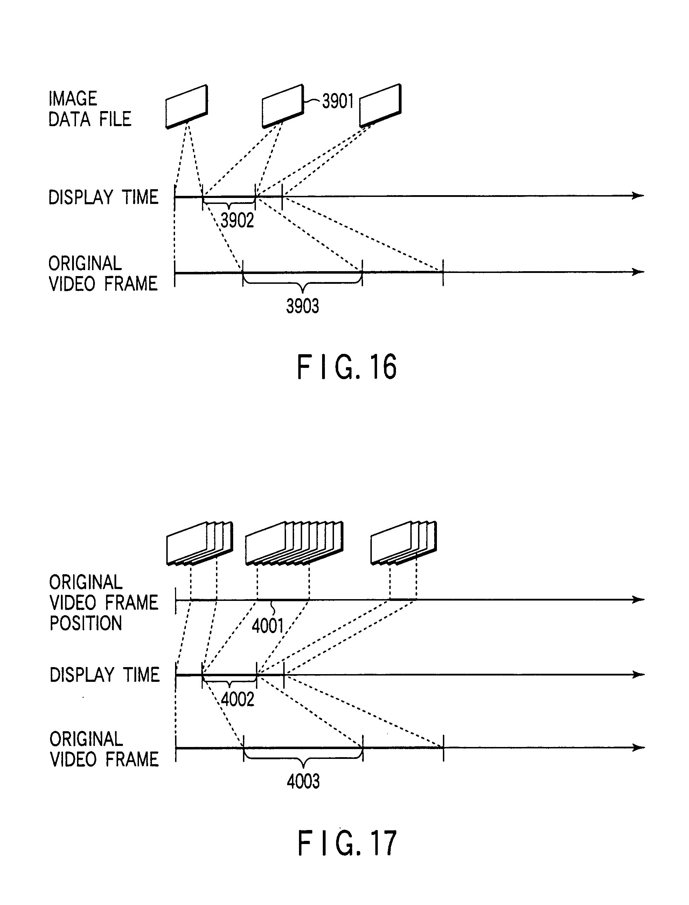

FIG. 16 shows an example in which the original information is allowed to have a time width with respect to the FIG. 10. In this case, for example, as video location information, display time information and original video information included in the same frame information, the location of the image data file 3901 for the display, the display time 3902, and the original video frame section 3903 which comprises the start point (frame location) and the section length are described to show that these correspond to each other.

That is, as a video representative of the original video frame section 3903, the image 3901 in the image data file described in the video location information is displayed.

Furthermore, as shown in FIGS. 12 and 13, if a set of frames is used as a video for the display, a section different from the original video frame section for displaying the video may be allowed to correspond to the original video information.

FIG. 17 shows an example in which the original video information is allowed to have a time width with respect to the FIG. 12. In this case, for example, as video location information, display time information and original video information included in the same frame information, a set 4001 of frames in the original video, the display time 4002, and the original video frame section 4003 which comprises the start point (frame location) and the section length are described to show that these correspond to each other.

At this time, the section 4001 of a set of frames which are described as video location information, and the original video frame section 4003 which is described as the original video information are not necessarily required to coincide with each other and a different section may be used for display.

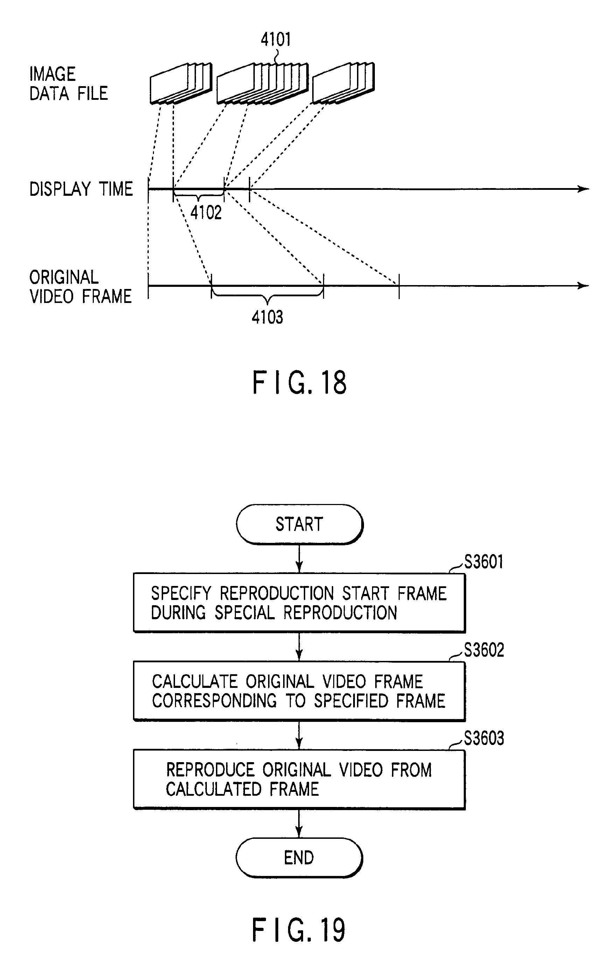

FIG. 18 shows an example in which the original video information is allowed to have a time width with respect to the FIG. 13. In this case, for example, as video location information, display time information and original video information included in the same frame information, a set 4101 of frames in the video file, the display time 4102, and the original video frame section 4103 which comprises the start point (frame location) and the section length are described to show that these correspond to each other.

At this time, the section of a set 4101 of frames described as video location information, and the original video frame section 4103 described as the original video are not necessarily required to coincide with each other. That is, the section of the set 4101 of the frames for the display may be shorter or longer than the original video frame section 4103. Furthermore, a video having completely different contents may be included therein. In addition, only particularly important section may be extracted from the section described in the original video location as the image data file so that collected video data is used.

At the time of displaying the videos based on, for example, the summarized reproduction (special reproduction) using these items of the frame information, it may be desired that the corresponding frame in the original video is referred to.

FIG. 19 shows a flow for starting the reproduction from the frame of the original video corresponding to the video frame displayed in special reproduction. At step S3601, the reproduction start frame is specified in the special reproduction. At step S3602, the original video frame corresponding to the specified frame is calculated with a method described later. At step S3603, the original video is reproduced from the calculated frames.

This flow can be used for referring to the corresponding location of the original video in addition to special reproduction.

At step S3602, as one example of a method for calculating the corresponding original video frame, there is shown a method for using the proportional distribution with respect to display time of the specified frame. The display time information included in the i-th frame information is set to Dᵢ sec, the section start location of the original video information is set to tᵢ sec, and the section length is set to dᵢ sec. If the location is specified at which t sec has passed from the start of the reproduction using the i-th frame information, the frame location of the corresponding original video is T = tᵢ + dᵢ × t/Dᵢ.

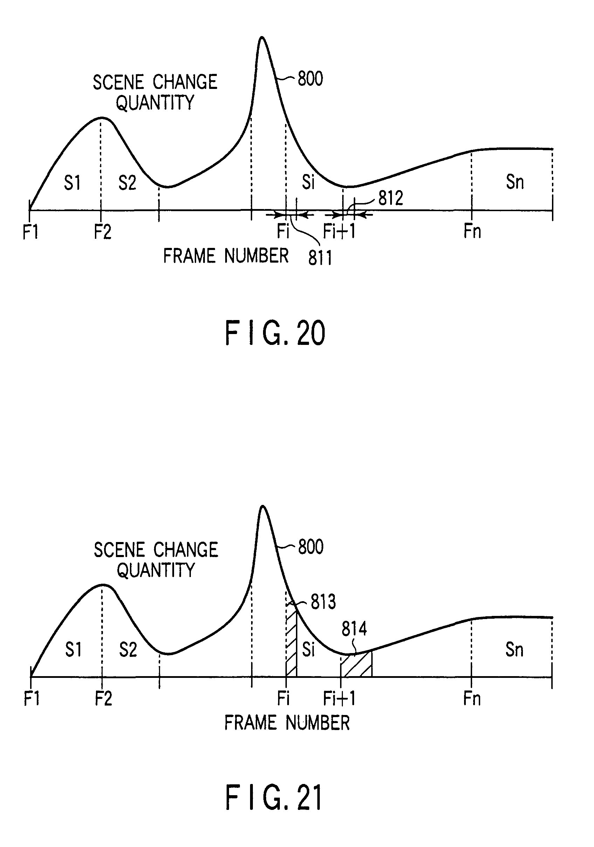

Referring to FIGS. 20 and 21, as examples of a method for selecting a frame, there will be explained a method for extracting the frame in a narrow interval where the motion of the screen quite often appears while extracting the frame in a wide interval where the motion of the screen rarely appears in accordance with the motion of the screen. The horizontal axis, the curve 800, and Sᵢ and Fᵢ are the same as those in FIG. 11.

In the example of FIG. 11, the video data is extracted one frame after another at an interval at which the scene change quantity between the frames from which the video data is extracted is made constant. FIGS. 20 and 21 show examples in which a set of a plurality of frames are extracted based on the frame Fᵢ as reference. For example, as shown in FIG. 20, the same number of continuous frames may be extracted from Fᵢ. The frame length 811 and the frame length 812 equal to each other. As shown in FIG. 21, the corresponding number of continuous frames may be extracted so that the total of the scene change quantity from Fᵢ becomes constant. The area 813 and the area 814 equal to each other. Various other methods can be considered.

It is possible to use the frame selection method in which the frame is extracted when the scene change quantity = 0 continues for more than a constant time.

As in the case of FIG. 11, the display time information 121 may be described so that the same display time may be provided with respect to any of frame sets in the cases of FIGS. 20 and 21. Alternatively, the display time information may be determined and described in a different method.

Next, one example of a processing for calculating the display time will be explained.

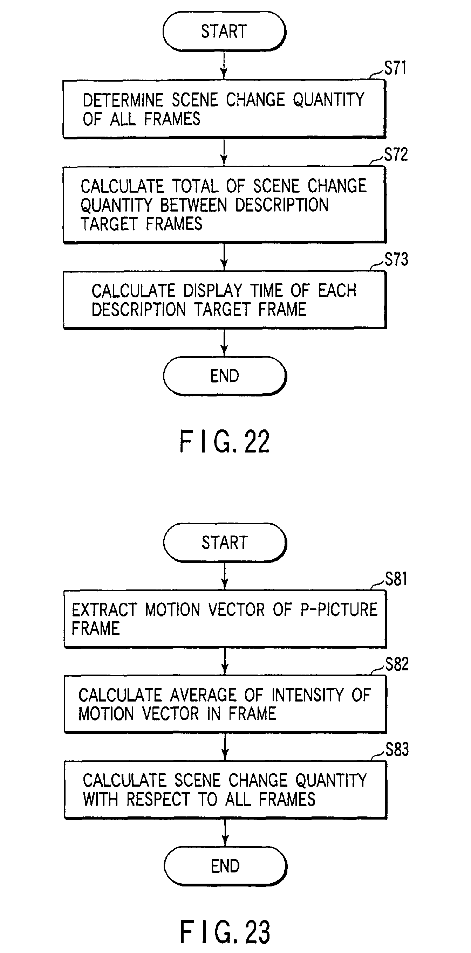

FIG. 22 shows one example of a procedure of the basic processing for calculating the display time so that the scene change quantity becomes constant as much as possible when the video described in the video location information is continuously reproduced in accordance with time described in the display time information.

This processing can be applied to a case in which the frames are extracted in any method. For example, if the frames are extracted in a method shown in FIG. 11, the processing can be omitted. Since the processing shown in FIG. 11 selects the frames such that the scene change quantity becomes constant when the frames are displayed for a fixed time period.

At step S71, the scene change quantity between adjacent frames is calculated with respect to all frames of the original video. If each frame of the video is represented in bit map, the differential value of the pixel between adjacent frames can be set to the scene change quantity. If the video is compressed with MPEG, the scene change quantity can be calculated by using a motion vector.

One example of a method for calculating the scene change quantity will be explained.

FIG. 23 shows one example of a basic processing procedure for calculating a scene change quantity of all frames from the video streams compressed with MPEG.

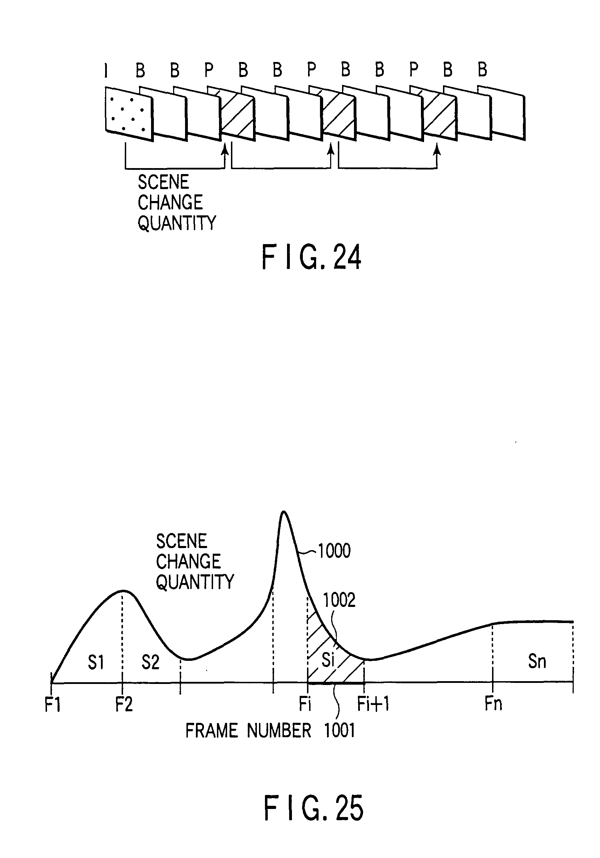

At step S81, a motion vector is extracted from the P picture frame. The video frame compressed with the MPEG is described with an arrangement of I picture (an inner-frame encoded frame), P picture (an inter-frame encoded frame in a forward prediction), and B picture (an inter-frame encoded frame in a backward prediction), as shown in FIG. 24. The P picture includes a motion vector corresponding to a motion from the preceding I picture or P picture.

At step S82, the magnitude (intensity) of the each motion vector included in the frame of one P picture is calculated, and an average thereof is set as a scene change quantity from the preceding I picture or P picture.

At step S83, on the basis of the scene change quantity calculated with respect to the P picture, the scene change quantity is calculated for each one frame corresponding to the frame other than the P picture. For example, if the average value of the motion vector of the P picture frame is p, and the interval from the preceding I picture or P picture from which the video is referred to is d, the scene change quantity per one frame of each frame is set to p/d.

Subsequently, at step S72 in the procedure of FIG. 22, the total of the scene change quantity of frames between the following description target frames is calculated from the description target frame described in the video location information.

FIG. 25 describes a change in the scene change quantity for each one frame. The horizontal axis corresponds to the frame number while a curve 1000 denotes a change in the scene change quantity. If the display time of the video having the location information of the frame information Fᵢ is calculated, the scene change quantity in the section 1001 up to Fᵢ₊₁ is added which corresponds to the frame location of the next description target frame. It is considered that this becomes an area Sᵢ of the hatching portion 1002, which is a magnitude of a motion of the frame location Fᵢ.

Subsequently, at step S73 in the procedure of FIG. 22, the display time of each frame is calculated. In order to set the scene change quantity to a constant level as much as possible, a larger quantity of the display time may only be allocated to the frame where the motion of the screen is large, so that the ratio of the display time allocated to the video of each frame location Fᵢ to the reproduction time may be set to Sᵢ/ΣSᵢ. When the total of the reproduction time is set to T, the display time of each video will be set to Dᵢ = T × Sᵢ/ΣSᵢ. The value of the total T of the reproduction time is defined as the total reproduction time of the original video.

If no scene change appears and Sᵢ = 0, the lower limit value (for example, 1) which is calculated in advance may be entered, or the frame information thereof may not be described. Even with respect to the frame where the screen change is very small even if Sᵢ = 0 is not provided and virtually no change is displayed on the actual reproduction, the lower limit value may be substituted and no frame information may be described. If no frame information is described, the value of Sᵢ may be added to Sᵢ₊₁ or may not be added thereto.

The processing for calculating this display time can be conducted for the preparation of the frame information with the special reproduction control information creating apparatus, but the processing can be conducted at the time of the special reproduction on the side of the video reproduction apparatus.

Next, there will be explained a case in which the special reproduction is conducted.

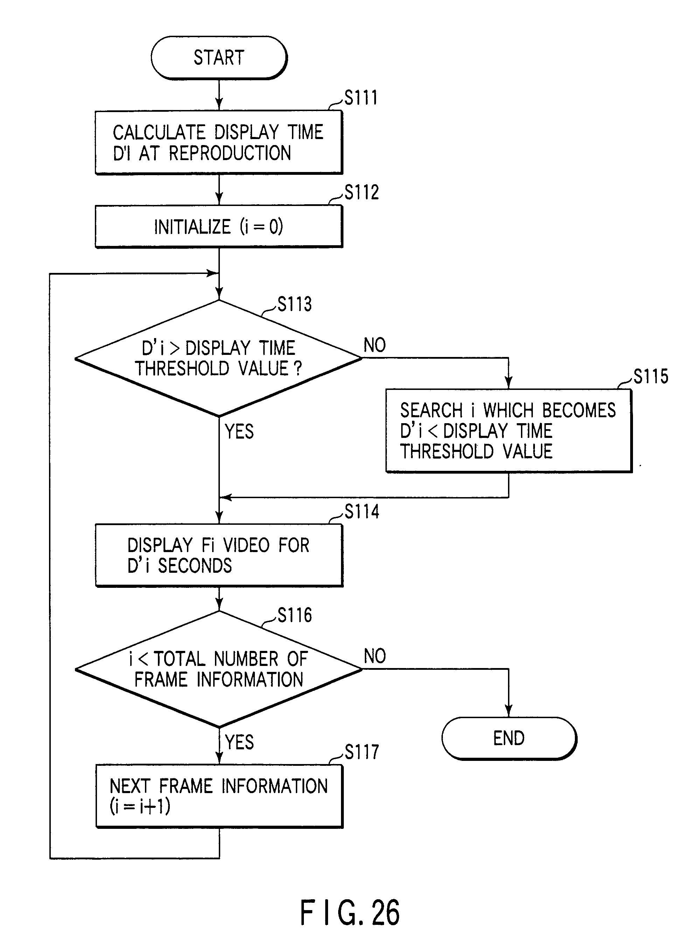

FIG. 26 shows one example for the N times high-speed reproduction on the basis of the special reproduction control information that has been described.

At step S111, the display time D'ᵢ at the time of reproduction is calculated on the basis of the reproduction rate information. The display time information described in the frame information is standard display time, the display time D'ᵢ = Dᵢ/N of each frame is calculated when reproduction at N times high-speed is conducted.

At step S112, initialization for the display is conducted, and i = 0 is set so that the first frame information is displayed.

At step S113, it is determined whether the display time D'ᵢ of the i-th frame information is larger than the threshold value of the preset display time.

If the display time is larger, the video location information included in the i-th frame information Fᵢ is displayed for D'ᵢ seconds at step S114.

If the display time is not larger, the process proceeds to step S115 to search the i-th frame information which is not smaller than the threshold value in a forward direction. During search, the display time of the frame information which is smaller than the threshold value of the display time is all added to the display time of the i-th frame information. The display time of the frame information which is smaller than the threshold value of the display time is set to 0. The reason why such processing is conducted is that the time for preparing the video to be displayed becomes longer than the display time when the display time at the time of reproduction becomes very short with the result that the display cannot be conducted in time. Then, if the display time becomes very short, the process proceeds to the next step without displaying the video. At that time, this display time of the video which is not displayed is added to the display time of the video to be displayed so that the total display time becomes unchanged.

At step S116, it is determined whether "i" is smaller than the total number of the frame information items in order to determine whether or not the frame information which is not displayed remains. If "i" is lower than the total number of the frame information items, the process proceeds to step S117 to increment "i" by one to create for the display of the next frame information. When "i" reaches the total number of the frame information items, the reproduction processing is completed.

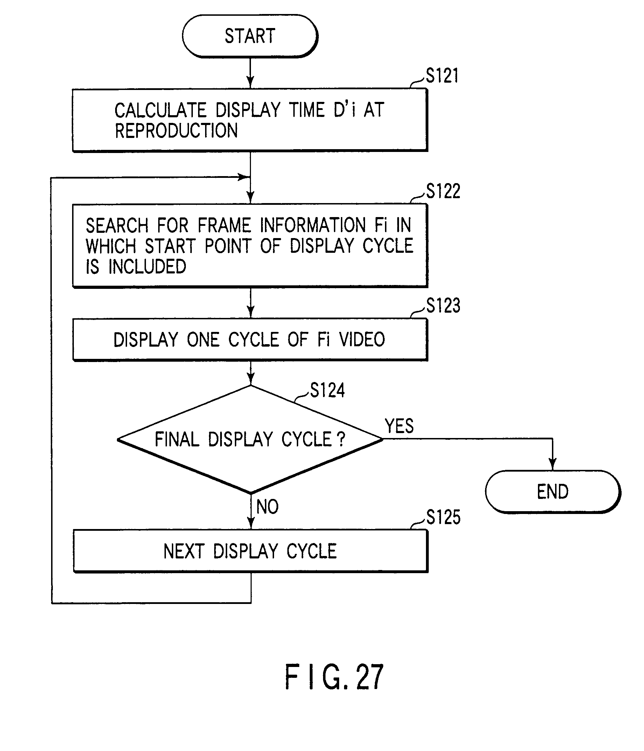

FIG. 27 shows one example for conducting the N times high-speed reproduction on the basis of the described special reproduction control information by taking the display cycle as a reference.

At step S121, the display time D'ᵢ of each frame is calculated as D'ᵢ = Dᵢ/ N at the N times high-speed reproduction. Here, the calculated display time is actually associated with the display cycle so that the video cannot be always displayed in a calculated time.

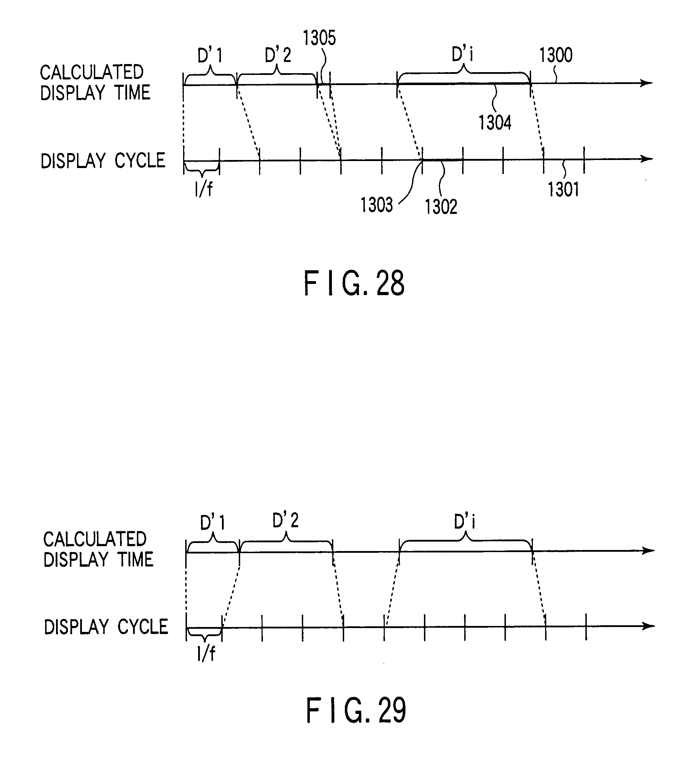

FIG. 28 shows a relationship between the calculated display time and the display cycle. The time axis 1300 shows the calculated display time while the time axis 1301 shows the display cycle based on the display rate. If the display rate is f frame/sec, an interval of the display cycle becomes 1/f sec.

Consequently, at step S122, the frame information Fᵢ including the start point of the display cycle is searched while the video included in the frame information Fᵢ is displayed for one display cycle (1/f sec) at step S123.

For example, the display cycle 1302 (FIG. 28) displays the video of the frame information corresponding to this display time because the display start point 1303 is included in the calculated display time 1304.

A method for allowing the display cycle correspond to the frame information may display the video at the nearest location of the start point of the display cycle, as shown in FIG. 29. If the display time becomes smaller than the display cycle like the display time 1305 of FIG. 28, the display of the video may be omitted. If the video is forcibly displayed, the display time before and after the video is shortened to adjust so that the total display time becomes unchanged.

At step S124, it is determined whether the current display is the final display or not. If the current display is the final display, the processing is completed. If the display is not the final display, the process proceeds to step S125 to conduct the processing of the next display cycle.

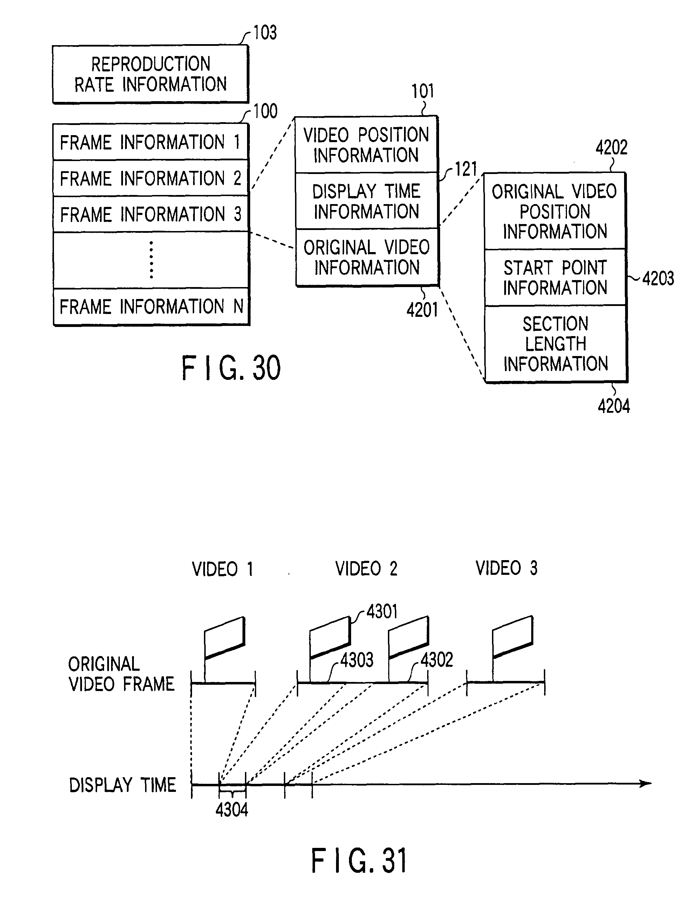

FIG. 30 shows another example of a data structure for describing the frame information. The frame information included in the data structure of FIG. 8 or FIG. 14 summarizes a single original video. A plurality of original videos can be summarized by expanding the frame information. FIG. 30 shows such an example. An original video location information 4202 for indicating the original video file location is added to the original video information 4201 included in the individual frame information. The file described in the original video location information 4202 is not necessarily required to handle the entire file. The file can be used in the form in which only a portion of the section is extracted. In this case, not only file information such as a file name or the like but also the section information showing which section of the file becomes an object are additionally described. Plural sections may be selected from the original video.

Furthermore, if several kinds of the original videos are present and identification information is individually added to the videos, the original video identification information may be described in place of the original video location information.

FIG. 31 explains an example in which a plurality of original videos are summarized and displayed by using the frame information added with the original video location information. In this example, three videos are summarized to display one summarized video. With respect to the video 2, in place of the whole section, two sections 4301 and 4302 are taken out to handle the respective videos. As the frame information, together with these original video information, the frame location (4303 with respect to 4301) of respective representative video is described as the video location information while the display time (4304 with respect to 4301) is described as the display time information.

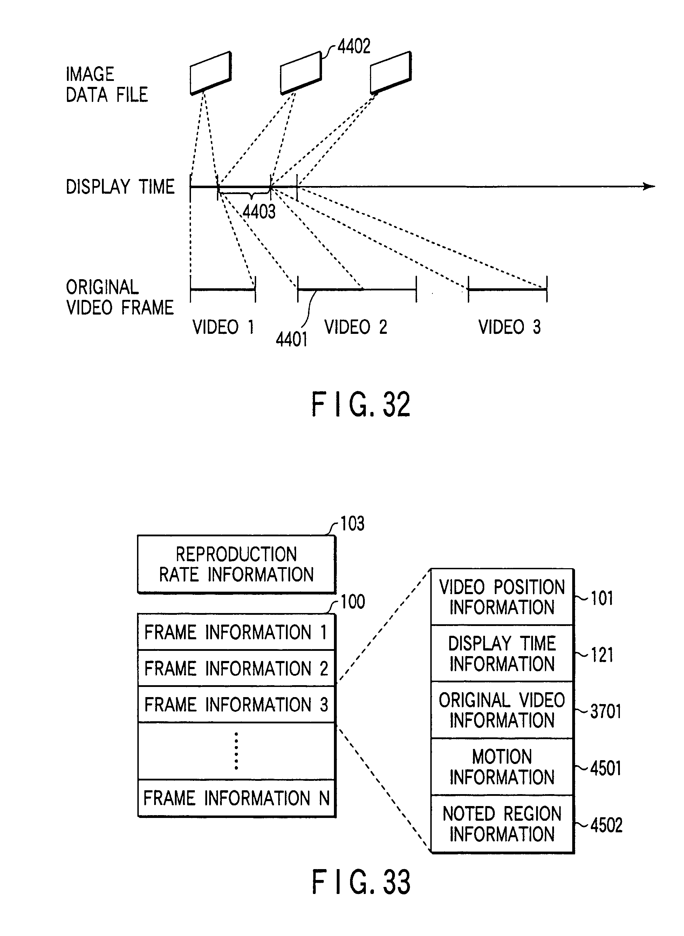

FIG. 32 explains another example in which a plurality of original videos are summarized and displayed by using the frame information added with the original video location information. In this example, three videos are summarized to display one summarized video. With respect to the video 2, in place of the whole section, a portion of the section is taken out. A plurality of sections may be taken out as described in FIG. 31. As the frame information, together with these items of the original video information (for example, the section information 4401 in addition to the video 2), the storage location of respective representative video files 4402 is described as the video location information and the display time 4403 is described as display time information.

Addition of the original video location information to the frame information which has been explained in these examples can be applied completely in the same way to the case in which a set of frames is used as video location information with the result that a plurality of original videos are summarized and displayed.

FIG. 33 shows another data structure for describing the frame information. In this data structure, in addition to the video location information 101, the display time information 121 and the original video information 3701 which has been already explained, a motion information 4501 and interest region information 4502 are added. The motion information 4501 describes a magnitude of a motion (a scene change quantity) in a section (the section described in the original video information) of the original video corresponding to the frame information. The interest region information 4502 refers to a description of the information which should be particularly interested in the video which is described in the video location information.

The motion information can be used for calculating the display time of the video described in the video location information as used at the time of calculating the display time from the motion of the video, as shown in FIG. 22. In this case, even when the display time information is omitted and only the motion information is described, special reproduction such as high-speed reproduction can be conducted in the same manner as in the case in which the display time is described. In this case, the display time is calculated at the time of reproduction.

Both the display time information and the motion information can be described at the same time. In that case, an application for displaying uses the required one of the two, or uses both in combination in accordance with the processing.

For example, the display time calculated irrespective of the motion is described in the display time information. A method for calculating the display time for cutting out important scenes from the original video corresponds to this. At the time of the high-speed reproduction of the summarized contents calculated in this manner, the motion information is used so that a portion with a large motion is reproduced slowly while a portion with a small motion is reproduced quickly with the result that a high-speed reproduction free from a large overlook is enabled.

The interest region information is used when the particularly interest region is present in the video described in the video location information of the frame information. For example, faces of persons who seem to be important correspond to this. At the time of displaying the video including such interest region information, the display may be conducted by overlapping a square frame so that the interest region can be easily detected. The frame display is not indispensable, and the video may only be displayed as it is.

The interest region information can be used for processing and displaying the special reproduction control information such as frame information or the like. For example, if a part of the frame information is reproduced and displayed, the frame information including the interest region information is displayed with priority. Further, it is assumed that the frame information including square area with large area has higher importance, thereby making it possible to selectively displaying he video.

As shown above, there has been explained an example in which the processing is conducted on the basis of the scene change quantity. Hereinafter, there will be explained a case in which the importance information is used.

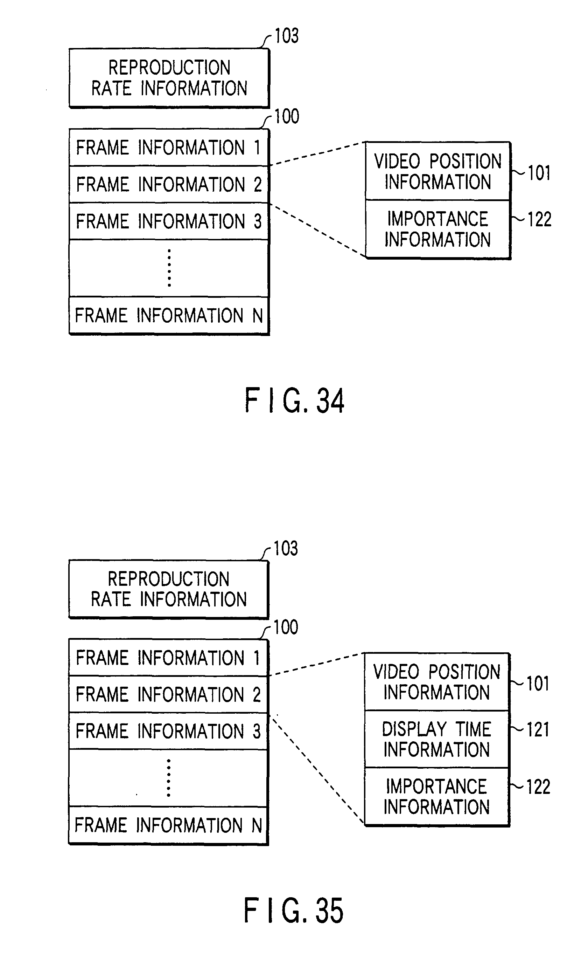

FIG. 34 is a view showing examples of a data structure of the frame information attached to the video.

An importance information 122 is described in addition to or in place of the display time control information 102 in the data structure of the frame information of FIG. 1. The display time is calculated based on the importance information 122.

The importance information 122 represents the importance of the corresponding frame (or a set of frames). The importance is represented, for example, as an integer in a constant range (for example, 0 to 100), or is represented as an actual number in a constant range (for example, 0 to 1). Otherwise, the importance information 122 may be represented as an integer or an actual number value without setting the upper limit. The importance information 122 may be attached to all the frames of the video, or only the frame in which the importance is changed.

In this case as well, it is possible to take any form of FIGS. 9, 10, 12, and 13. The frame extraction method of FIGS. 11, 20, and 21 can be used. In this case, the scene change quantity of FIGS. 11, 20, and 21 may be replaced by the importance.

Next, in the example which has been explained above, the display time is set with the scene change quantity. However, the display time may be set by the importance information. Hereinafter, the method for setting the display time will be explained.

In the setting the display time on the basis of the scene change quantity exemplified above in order to understand the video contents well, the display time is set long where the change quantity is large and the display time is set short where the change quantity is small. In the setting of the display time on the basis of this importance, the display time is set long where the importance is high and the display time is set short where the importance is low. That is, since the method for setting the display time according to the importance is basically similar to the method for setting the display time based on the scene change quantity, the method will be briefly explained.

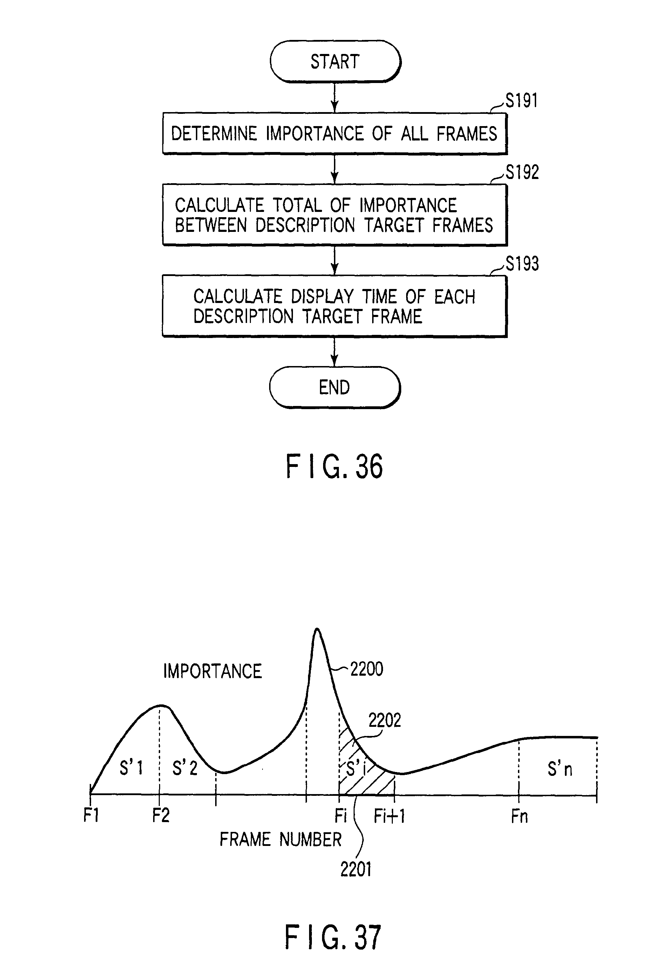

FIG. 36 shows one example of the basic processing procedure in this case.

At step S191, the importance of all frames of the original video will be calculated. A concrete method thereof will be exemplified later.

At step S192, the total of the importance from the description object frame described in the video location information to the next description object frame will be calculated.

FIG. 37 describes the change in the importance for each one frame. Reference numeral 2200 denotes the importance. If the display time of the video having the location information of the frame information Fᵢ is calculated, the importance in the section up to Fᵢ₊₁ which is the next description object frame location is accumulated. The accumulation result is an area S'ᵢ of the hatching portion 2202.

At step S193, the display time of each frame is calculated. Suppose that the ratio of the display time allocated to the video at each frame location Fᵢ the reproduction time is set to S'ᵢ/ΣS'ⱼ. When the total of the reproduction time is set to T, the display time of each video becomes Dᵢ = T × S'ᵢ/S'ⱼ. The value of the total T of the reproduction time is a standard reproduction time to be regulated as the total reproduction time of the original video.

When the total of the importance becomes S'ᵢ = 0, the preset lower limit value (for example, 1) may be described, or the frame information may not be described. Even if S'ᵢ = 0 is not established but the importance is very small, and it is assumed that such a frame is virtually not displayed, the lower limit value may be described or the frame information may not be described. If the frame information is not described, the S'ᵢ value may be added and may not be added to S'ᵢ₊₁.

As shown in FIG. 34, in the data structure of the frame information of FIG. 1, the video location information 101, the display time information 121 and the importance information 112 may be described in each frame information "i". At the time of the special reproduction, the display time information 121 is used but the importance information 122 is not used; the importance information 122 is used but the display time information 121 is not used; both the importance information 122 and the display time information 121 are used; and neither the importance information 122 nor the display time information 121 is used.

The processing of calculating the display time can be conducted for preparing the frame information with the special reproduction control information creating apparatus. However, the processing may be conducted on the side of the video reproduction apparatus at the time of the special reproduction.

Next, a method (for example, step S191 of FIG. 36) for calculating the importance of each frame or the scene (video frame section) will be explained.

Since various factors are normally intertwined in the judgment as to a certain scene having a video is important, the most appropriate method for calculating the importance is a method in which man determines the importance. In this method, importance evaluator evaluates the importance for each scene of the video, or for each of the constant interval, so that the importance is input as the importance data. The importance data referred to here refer to a frame number or time and a correspondence table with the importance value. In order to avoid subjective evaluation of importance, a plurality of importance evaluators are allowed to evaluate the same video to calculate the average value (or a median or the like will do) for each scene or each video frame section so that the importance is finally determined. In such manual input of the importance data, it is possible to add vague expressions and a plurality of elements which cannot be expressed in words to the importance.

In order to omit the trouble of determination by man, it is preferable that a phenomenon is expected in which a video scene which seems to be important is likely to appear, and the processing is used which automatically evaluates such phenomenon to convert the phenomenon into importance. Here, some examples are shown in which importance is automatically created.

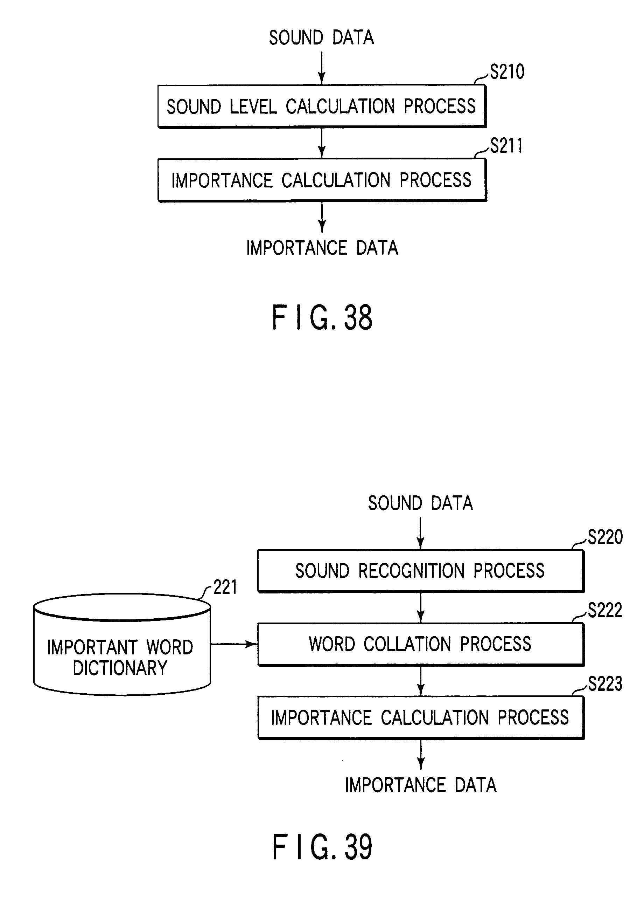

FIG. 38 shows an example of a processing procedure at the time of automatically calculating important data on the basis of the idea that a scene having a large sound level is important. FIG. 38 is established as a function block diagram.

In the sound level calculation processing at step S210, the sound level at each time is calculated out when the sound level attached to the video is calculated. Since the sound level largely changes in an instant, the smoothing processing or the like may be conducted in the sound level calculation processing at step S210.

In the importance calculation processing at step S211, a processing is conducted for converting into the importance the sound level output as a result of the sound level calculation processing. For example, the sound level input is linearly converted into a value of 0 to 100, the sound level having the lowest sound level set in advance being set to 0, and having the highest sound level being set to 100. The sound level not more than the lowest sound level is set to 0 while the sound level not less than the highest sound level is set to 100. As a result of the importance calculation processing, the importance at each time is calculated to be output as importance data.

FIG. 39 shows an example of a processing procedure of a method for automatically calculating another importance level. FIG. 39 is established as a function block diagram.

In processing of FIG. 39, it is determined that the scene in which important words registered in advance in the sound attached to the video quite often appear is important.

In the sound recognition processing at step S220, when the sound data attached to the video is input, the language (words) man talks is converted into text data in the sound recognition processing.

In the important word dictionary 221, words which are likely to appear in important scenes are registered. If the degree of importance of registered words differs, the weight is added to each of the registered words.

In the word collation processing at step S222, the text data which is an output of the sound recognition processing is collated with the words registered in the important word dictionary 221 to determine whether or not important words are talked.

In the importance calculation processing at step S223, the importance in each scene of the video or at each time is calculated from the result of the word collation processing. In this calculation, the number of the appearances of important words and the weight of the important words are used so that the processing is conducted to increase the importance around the time at which, for example, important words have appeared (or of the scene in which the important words have appeared) by a constant value, or a value proportional to the weight of the important words. As a result of the important calculation processing, the importance at each time is calculated to be output as importance data.

If the weight of all the words is set to the same, the important word dictionary 221 becomes unnecessary. This is because that it is assumed that the scene in which many words are spoken is important. At this time, in the word collation processing at step S222, the processing of counting the number of words output from the sound recognition processing is conducted. Not only the number of words but also the number of characters may be counted.

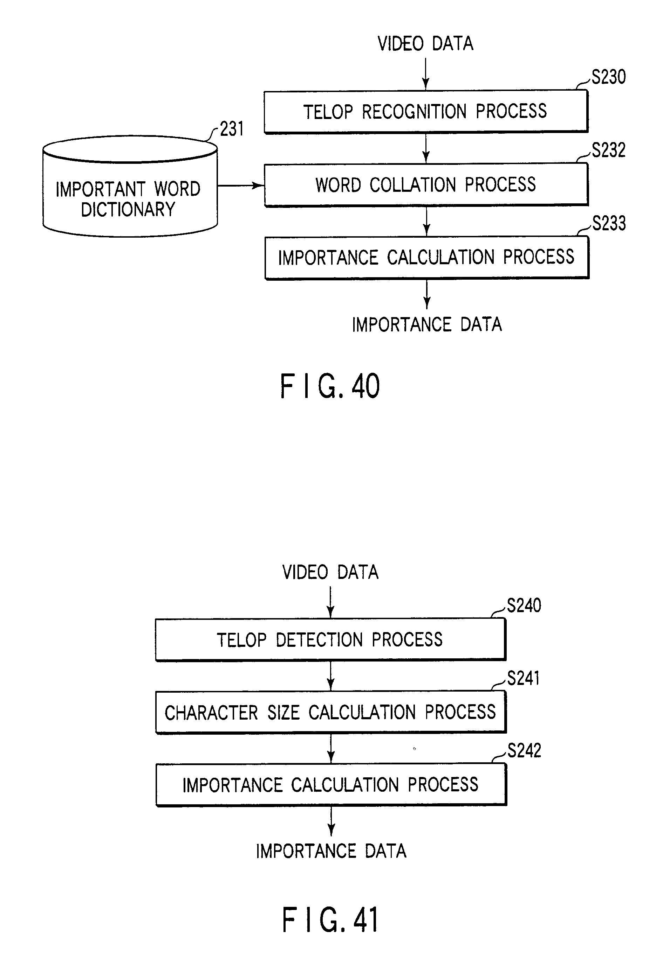

FIG. 40 shows an example of a processing procedure of the method for automatically calculating the other importance level. FIG. 40 is also established as a function block diagram.

The processing of FIG. 40 determines that the scene in which many important words appear which are registered in advance in the telop appearing in the video is important.

In the telop recognition processing at step S230, the character location in the video is specified to recognize characters by converting the video region at the character location into a binary value. The recognized result is output as text data.

The important word dictionary 231 is the same as the important word dictionary 221 of FIG. 39.

In the word collation processing at step S232, in the same manner as at step S222 in the procedure of FIG. 39, the text data which is an output of the telop recognition processing is collated with the words registered in the important word dictionary 231 to determine whether or not important words have appeared.

In the importance calculation processing at step S232, the importance at each scene or at each time is calculated from the number of appearances of important words, and weight of the important words in the same manner as at step S223 in the procedure of FIG. 39. As a result of the importance calculation processing, the importance at each time is determined to be output as importance data.

If the weight of all the words is set to the same, the important word dictionary 231 becomes unnecessary. This is because that it is assumed that the scene in which many important words appear is an important scene. At this time, in the word collation processing at step S232, processing is conducted for counting the number of words simply output from the telop recognition processing. Not only the number of words but also the number of characters may be counted.

FIG. 41 shows an example of a processing procedure of a method for automatically calculating still another importance level. FIG. 41 is established as a function block diagram.

The processing of FIG. 41 determines that when the telop appearing in the video is in larger character size, the scene is more important.

In the telop detection processing at step S240, the processing is conducted for specifying the location of character string in the video.

In the character size calculation processing at step S241, individual characters are extracted to calculate the average value or the maximum value of the size (area) of the character.

In the importance calculation processing at step S242, the importance is calculated which is proportional to the size of the character which is an output of the character size calculation processing. If the calculated importance is too large or too small, the processing is conducted for restricting the importance to a preset range with the threshold value processing. As a result of the importance calculation processing, the importance at each time is calculated to be output as importance data.

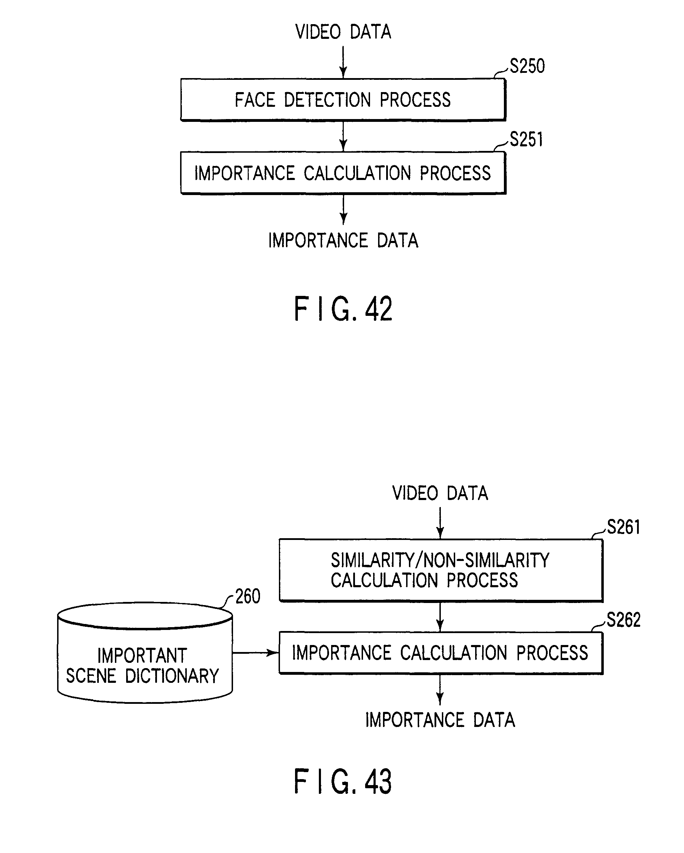

FIG. 42 shows an example of the processing procedure of a method for automatically calculating still another importance level. FIG. 42 is established as a function block diagram.

The processing of FIG. 42 determines that the scene in which human faces appear in the video is important.

In the face detection processing at step S250, the processing is conducted for detecting an area which looks like a human face in the video. As a result of the processing, the number of areas (number of faces) which are determined to be a human face is output. The information on the size (area) of the face may be output at the same time.

In the importance calculation processing at step S251, the number of faces which is an output of the processing of detecting the faces is multiplied by several times to calculate the importance. If the output of the face detection processing includes face size information, calculation is conducted so that the importance increases with an increase in the size of faces. For example, the area of the face is multiplied by several times to calculate the importance. As a result of the importance calculation processing, the importance at each time is calculated to be output as importance data.

FIG. 43 shows an example of the processing procedure of a method for automatically calculating still other importance level. FIG. 43 is also established as a function block diagram.

In the processing of FIG. 43, it is determined that the scene in which a video similar to the video which is registered in advance appears is important.

The video which should be determined to be important is registered in the important scene dictionary 260. The video is recorded as raw data or is recorded in a data compressed form. Instead of the video itself, the characteristic quantity (a color histogram, a frequency or the like) of the video may be recorded.

In the similarity/non-similarity calculation processing at step S261, similarity/non-similarity between the video registered in the important scene dictionary 260 and the input video data is calculated. As the non-similarity, the total of the square error or the total of the difference in the absolute value is used. If the video data is recorded in the important scene dictionary 260, the total of the square error for each of the corresponding pixels and the total of the differential of the absolute valued are calculated as non-similarity. If the color histogram of the video is recorded in the important scene dictionary 260, the same color histogram is calculated with respect to the input video data to calculate the total of the square error between histograms and the total of the difference in the absolute values to set these totals as non-similarity.

In the importance calculation processing at a step S262, the importance is calculated from the similarity/ non-similarity which is an output of the similarity and non-similarity calculation processing. The importance is calculated in such a manner that larger similarity provides greater importance if the similarity is input while larger non-similarity provides smaller importance if the non-similarity is input. As a result of the importance calculation processing, the importance at each time is calculated to be output as the importance data.

Furthermore, as another method for automatically calculating the importance, the scene having a high instant viewing rate is set as an important scene. The data on the instant viewing rate is obtained as a result of the summing of the viewing rate investigation, so that importance is calculated by multiplying the instant viewing rate by constant times. Needless to say, there are various other methods.

The importance calculation processing may be solely conducted, or a plurality of data items may be used at the same time to calculate the importance. In the latter case, for example, the importance of one video is calculated with several different methods to calculate the final importance as an average value or a maximum value.

In the above embodiment, the explanation has been given by citing the scene change quantity and the importance. However, it is possible to use one item of information or a plurality of items of information (described in the frame information) together with the scene change quantity or the importance or instead of the scene change quantity or importance.

Next, there will be explained a case in which information for the control of reproduction/non-reproduction is added to the frame information (see FIG. 1).

It is desired that either only a specific scene or a part thereof (for example, a high-light scene) or only a scene or a part thereof in which a specific person appears is reproduced. Thus, there is a demand of watching only a portion of the video.

In order to satisfy this desire, the reproduction/non-reproduction information may be added to the frame information for controlling the reproduction or the non-reproduction. As a consequence, only a part of the video is reproduced or only a part of the video is not reproduced on the basis of the reproduction/non-reproduction information.

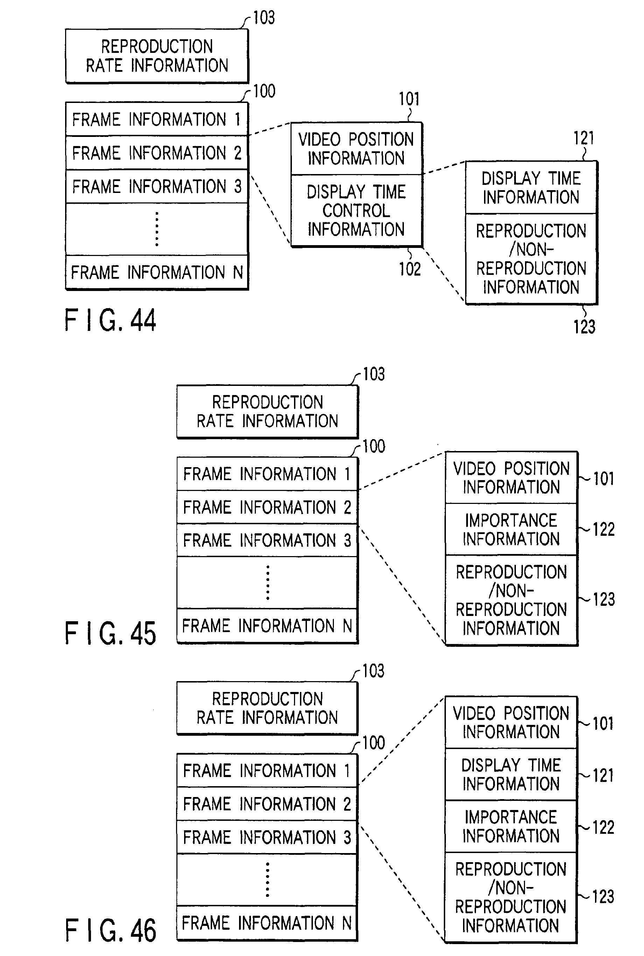

FIGS. 44, 45, and 46 show examples of a data structure in which the reproduction/non-reproduction information is added.

FIG. 44 shows a data structure in which the reproduction/non-reproduction information 123 is added to the data structure of FIG. 8. FIG. 45 shows a data structure in which the reproduction/non-reproduction information 123 is added to the data structure of FIG. 34. FIG. 46 shows a data structure in which the reproduction/non-reproduction information 123 is added to the data structure of FIG. 35. Though not shown, it is possible to add the reproduction/non-reproduction information 123 to the data structure of FIG. 1.

The reproduction/non-reproduction information 123 may be binary information specifying whether the video is reproduced or not or a continuous value such as reproduction level or the like.

For example, in the latter case, when the reproduction level exceeds a certain threshold value at the time of reproduction, the video is reproduced. When the reproduction level is less than the threshold value, the video is not reproduced. The user can directly or indirectly specify the threshold value.

The reproduction/non-reproduction information 123 may be set as independent information to be stored. If the reproduction or non-reproduction is selectively specified, the non-reproduction can be specified when the display time shown in the display time information 121 is set to a specific value (for example, 0 or -1). Alternatively, the non-reproduction can be specified when the importance indicated by the importance information 122 is set to a specific value (for example, 0 or -1). The reproduction/non-reproduction information 123 may not be added.

If the reproduction or non-reproduction is specified with a level value, the display time information 121 and/or the importance information 122 (represented by the level value) can be used as a substitute.

If the reproduction/non-reproduction information 123 is maintained as independent information, the quantity of data increases by that quantity. It is possible to see a digest of the video by allowing the non-reproduction specification portion not to be reproduced on the reproduction side. It is also possible to see the whole video by reproducing the non-reproduction specified portion. If the reproduction/ non-reproduction information 123 is not maintained as independent information, it is necessary to appropriately change the display time specified, for example, as 0 in order to see the whole video by reproducing the non-reproduction specified portion.

The reproduction/non-reproduction information 123 may be input by man or may be determined with some conditions. For example, when the motion information of the video is set to a constant value or more, the video is reproduced. When the motion information of the video is not set to a constant value or more, the video is not reproduced so that only brisk motion portion can be reproduced. When it is determined that the skin color is larger or smaller than the constant value from color information, only the scene where man appears can be reproduced. A method for calculating the information with the magnitude of sound, and a method for calculating the information from the reproduction program information which is input in advance can be considered. The importance may be calculated with some technique to create the reproduction/non-reproduction information 123 from the importance information. When the reproduction/non-reproduction information is set to a continuous value, the importance may be calculated by converting the information into the reproduction/non-reproduction information.

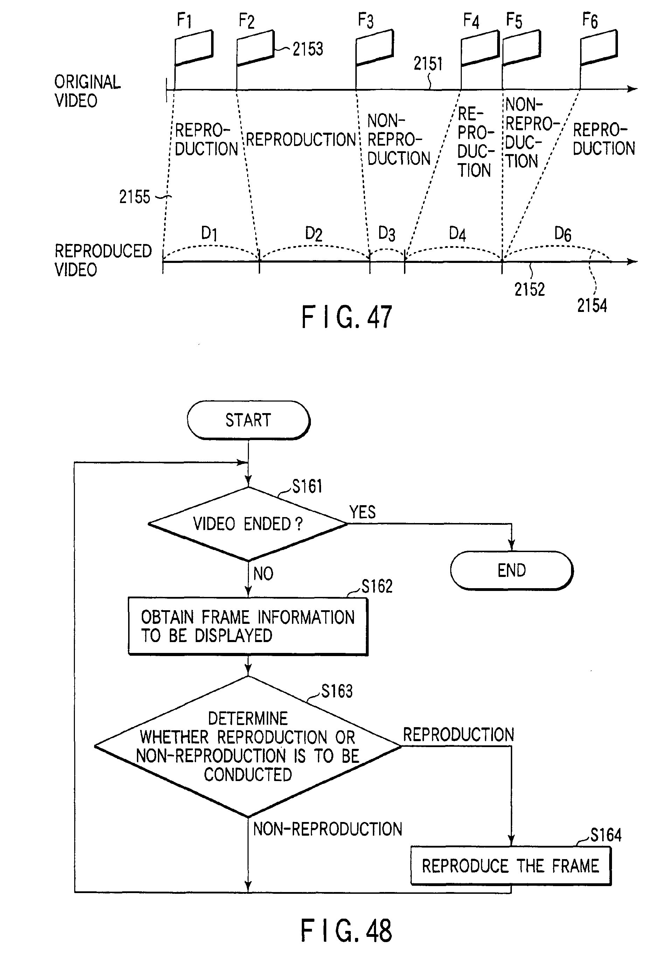

FIG. 47 shows an example in which reproduction/ non-reproduction control is carried out so that video is reproduced on the basis of the reproduction/non-reproduction information 123.

In FIG. 47, it is supposed that the original video 2151 is reproduced on the basis of the video frame location information represented with F₁ through F₆ or the video frame group location information 2153 and the display time information represented with D₁ through D₆. At this time, it is supposed that the reproduction/non-reproduction information is added to the display time information 2154. In this example, the sections of D₁, D₂, D₄ and D₆ can be reproduced, and other sections cannot be reproduced, the sections of D₁, D₂, D₄ and D₆ are continuously reproduced as the reproduction video 2152 (while other sections cannot be reproduced).

For example, in the frame Fᵢ of the reproduction video, if the display time is set to D⁺ᵢ when the reproduction/non-reproduction information 123 shows reproduction, and the display time is set to D⁻ᵢ when the reproduction/non-reproduction information 123 shows the non-reproduction, ΣᵢD⁺ᵢ = T' when the total time of the reproduction portion of the original video is set to T'. Normally, the display time of D⁺ᵢ is set to a time which is required to reproduce the original video at a normal speed. The reproduction speed may be set to a predetermined high-speed. Information may be described as to which times the speed is to be set. When it is desired that the video is reproduced at N times high-speed, the display time D⁺ᵢ of the reproduction portion is multiplied by 1/N times. For example, in order to perform reproduction at the predetermined time D', the display time D⁺ᵢ of each reproduction portion may be processed and displayed at D'/ΣᵢD⁺ᵢ times.

If the display time of each frame (or a frame group) is determined on the basis of the frame information, the determined display time may be adjusted.

In a method in which the calculated display time is not adjusted, the display time which is calculated without taking into consideration the generation of the non-reproduction section is used as it is, so that when the display time exceeding 0 is originally allocated to the non-reproduction section the whole display time is shortened for that allocation portion.

In a method in which the calculated display time is adjusted, for example, if the display time exceeding 0 is originally allocated to the non-reproduction section, the adjustment is made by multiplying by a constant number the display time of each of the frames (or the frame group) to be reproduced so that the whole display time becomes equal to the time at the time of the reproduction of the non-reproduction section.

The user may make a selection as to whether the adjustment is to be made.

If the user specifies the N times reproduction, the N times high-speed reproduction processing may be conducted without the adjustment of the calculated display time. The N times high-speed reproduction processing may be conducted on the basis of the display time after the adjustment of the calculated display time in the above manner (the display time of the former becomes shorter).

The user may specify the whole display time. In this case as well, for example, the display time of each frame (or a frame group) to be reproduced is multiplied by a constant number to make an adjustment so that the display time becomes equal to the specified whole display time.

FIG. 48 shows one example of the processing procedure for reproducing only a portion of the video on the basis of the reproduction/non-reproduction information 123.

At step S162, the frame information (video location information and display time information) is read to determine whether the frame is to be reproduced from the reproduction/non-reproduction information in the display time information at step S163.

When it is determined that the reproduction is to be conducted, the frame is displayed for the portion of the display time at step S164. When it is determined that the reproduction is not to be conducted, the frame is not displayed and the processing is moved to the next frame processing.

It is determined at step S161 whether or not the whole video to be reproduced is processed. When the whole video is processed, the reproduction processing is also ended.

When it is determined that the frame is to be reproduced or not at step S163, it is desired in some cases that the determination is depending on the taste of the user. At this time, it is determined from the user profile whether or not the non-reproduction portion is reproduced in advance before the reproduction of the video. When the non-reproduction portion is reproduced, the frame is reproduced without fail at step S164.

In addition, when the reproduction/non-reproduction information is described as a continuous value, a threshold value is determined from the user profile for differentiating the reproduction and the non-reproduction to determine the reproduction or the non-reproduction depending on whether or not the reproduction/non-reproduction information exceeds the threshold value. Except for using the user profile, for example, the threshold value is calculated from the importance set for each frame, or information may be received in advance from the user as to whether the reproduction or non-reproduction is provided in real time.

In this manner, it becomes possible to reproduce only a portion of the video by adding to the frame information the reproduction/non-reproduction information 123 for controlling whether the video is reproduced or not with the result that it becomes possible to reproduce only the high-light scene or only the scene in which a man or an object of interest appears.

Next, there will be explained a describing method if the location information of media (for example, text or sound) other than the video associated with the video to be displayed, and time for displaying or reproducing the video is added to the frame information (see FIG. 1) as additional information.

In FIG. 8, the video location information 101 and the display time information 102 are included in each frame information 100. In FIG. 34, the video location information 101 and importance information 122 are included in each frame information 100. In FIG. 35, the video location information 101, the display time information 121, and importance information 122 are included in each frame information 100. In FIGS. 44, 45, and 46, there is further shown an example in which the reproduction/non-reproduction information 123 is included in each frame information 100. In any example, 0 or more sound location information 2703, sound reproduction time information 2704, 0 or more text information 2705 and text display time information 2706 (however, 1 or more in any of the information) may be added.

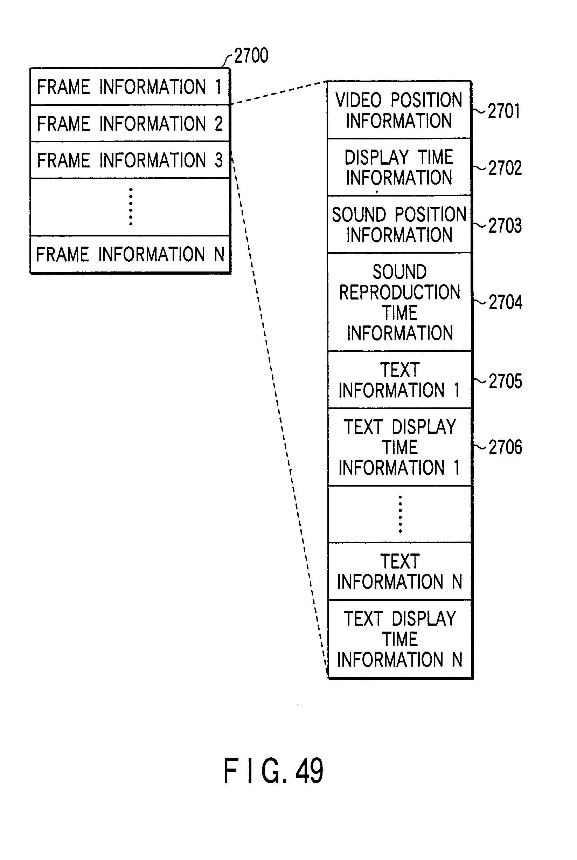

FIG. 49 shows an example in which one set of sound location information 2703 and sound reproduction time information 2704 and N sets of text information 2705 and text display time information 2706 are added to an example of the data structure of FIG. 8.

The sound is reproduced for the time indicated by the sound reproduction time information 2704 from the location indicated by the sound location information 2703. An object of reproduction may be sound information attached to the video from the beginning. Background music is created to be newly added.

The text displays the text information indicated by the text information 2705 for the time indicated by the text display time information 2706. A plurality of items of text information may be added to one video frame.

The time when the sound reproduction and the text display are started is the same as the time when the associated video frame is displayed. The sound reproduction time and the text display time are set within the range of the associated video frame time. If continuous sound is reproduced over a plurality of video frames, the sound location information and the reproduction time may be set to be continuous.

With such a method, summarized sound and summarized text can be made possible.

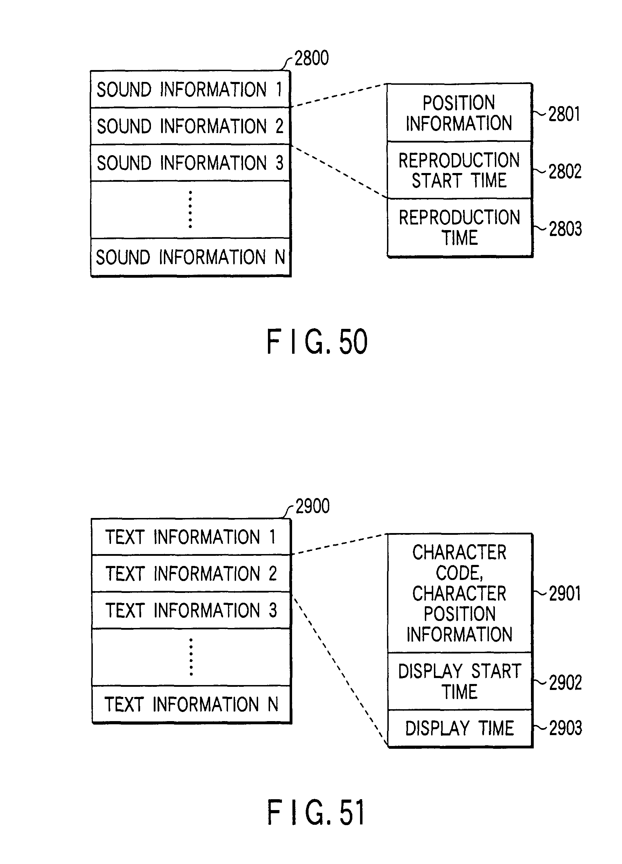

FIG. 50 shows one example of a method for describing the sound information separately from the frame information. This is an example of a data structure for reproducing sound associated with the video frame which is displayed at the time when the special reproduction is conducted. A set of the location information 2801 showing the location of the sound to be reproduced, reproduction start time 2802 when the sound reproduction is started, and reproduction time 2803 when the reproduction is continued is set as one item of sound information 2800 to be described as an arrangement of this sound information.

FIG. 51 shows a data structure for describing the text information. The data structure has the same structure as the sound information of FIG. 50, and a set of character code location information 2901 of the text to be displayed, a display start time 2902, and a display time 2903 is set as one item of text information 2900 to be described as an arrangement of this sound information. As information corresponding to the character code location information 2901, instead of the character code location information 2901, the location information may be used which indicates a location where the character code is stored, or a location where the character is stored as a video.

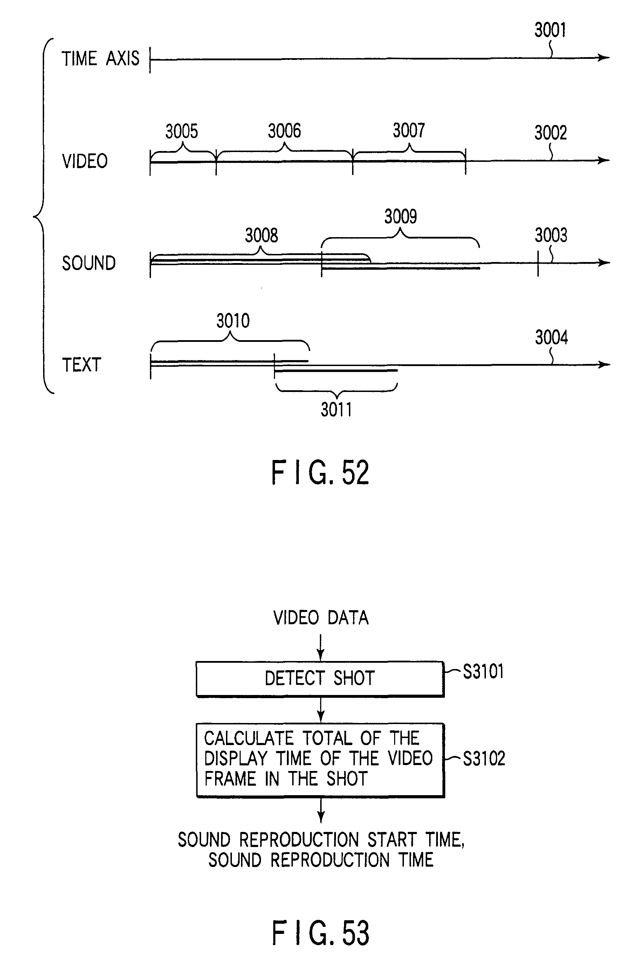

The above sound information or the text information is synchronized with the display of the video frame to be displayed as information associated with the video frame or a constant video frame section in which the displayed video frame is present. As shown in FIG. 52, the reproduction or the display of the sound information or the text information is started with the lapse of time shown by the time axis 3001. In the beginning, the video 3002 is displayed and reproduced for the described display time in an order in which the respective video frames are described. Reference numerals 3005, 3006 and 3007 denote respective video frames and a predetermined display time is allocated thereto. The sound 3003 is reproduced when the reproduction start time described in each sound information comes. When the reproduction time described in a similar manner has passed away, the reproduction is suspended. As shown in FIG. 52, a plurality of sounds 3008 and 3009 may be reproduced. In a similar manner as the sound, the text 3004 is also displayed when the display time described in the each of the text information comes. When the display time which is described has passed away, the display is suspended. A plurality of texts 3010 and 3011 may be displayed at the same time.

It is not required that the sound reproduction start time and the text display start time coincides with the time at which the video frame is displayed. It is not required that the sound reproduction time and the text display time coincides with the display time of the video frame. These times can be freely set, on the contrary, the display time of the video frame may be changed in accordance with the sound reproduction time and the text display time.

It is possible that these times can be manually set by man.

In order to omit the trouble of determination by man, it is preferable to determine a phenomenon which is likely to appear in the video scene which seems to be important and to automatically set these times. Hereinafter, several examples of automatic setting are shown.

FIG. 53 shows one example of a processing procedure in which a continuous video frame section is determined which is referred to as a shot from a change-over of the screen up to the next change-over of the screen, so that the total of the display time of the video frames included in the shot is defined as the sound reproduction time. FIG. 53 is also established as a function block diagram.

At step S3101, the shot is detected from the video. For this purpose, there are used such methods as a method for detecting a cut of a motion picture from the MPEG bit streams using a tolerance ratio detection method. (The transactions of the institute of electronics, information and communication engineers, Vol. J82-D-II, No. 3, pp. 361-370, 1999) and the like.

At step S3102, the video frame location information is referred to thereby investigating which shot respective video frames belong to. Furthermore, the display times of respective shots are calculated by taking the total of the display times of the video frames.

For example, the sound location information is set as the sound location corresponding to the start of the shot. The sound reproduction start time may be allowed to coincide with the display time of the initial video frame which belongs to each shot while the sound reproduction time may be set to be equal to the display time of the shot. Otherwise, in accordance with the reproduction time of the sound, the display time of the video frames included in each shot may be corrected. Although the shot is detected here, if a data structure is taken wherein the importance information is described in the frame information, the section having importance exceeding the threshold value is determined by using the importance with respect to the video frame so that the sound included in the section may be reproduced.

If the determined reproduction time does not meet a constant reference, the sound may not be reproduced.

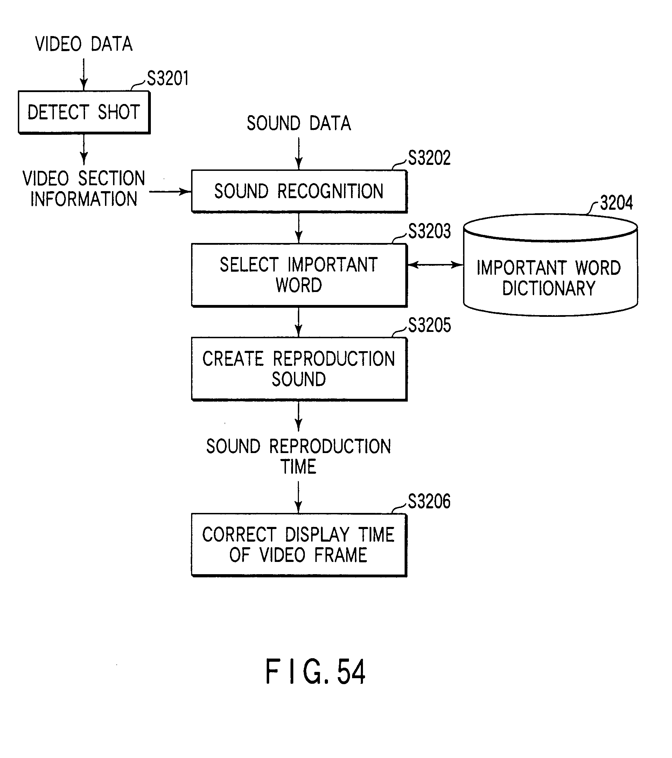

FIG. 54 shows one example of a processing procedure in which important words are taken out from sound data corresponding to the shot or the video frame section having the high importance with sound recognition so that the words, or the sound including the words or the sound in which a plurality of words are combined are reproduced. FIG. 54 is also established as a function block diagram.

At step S3201, the shot is detected. In place of the shot, the video frame section having the high importance is calculated.

At step S3202, the sound recognition is carried out with respect to the sound data section corresponding to the obtained video frame section.

At step S3203, sounds including the important word portion or sounds of the important word portion are determined from the recognition result. In order to select the important words, an important word dictionary 3204 is referred to.

At step S3205, the sound for reproduction is created. Continuous sounds including the important words may be used as they are. Only important words may be extracted. Sounds having a combination of a plurality of important words may be created.

At step S3206, in accordance with the reproduction time of the created time, the display time of the video frame is corrected. However, the number of selected words may be decreased and the reproduction time of the sound may be shortened so that the sound reproduction time is set to be within the display time of the video frame.

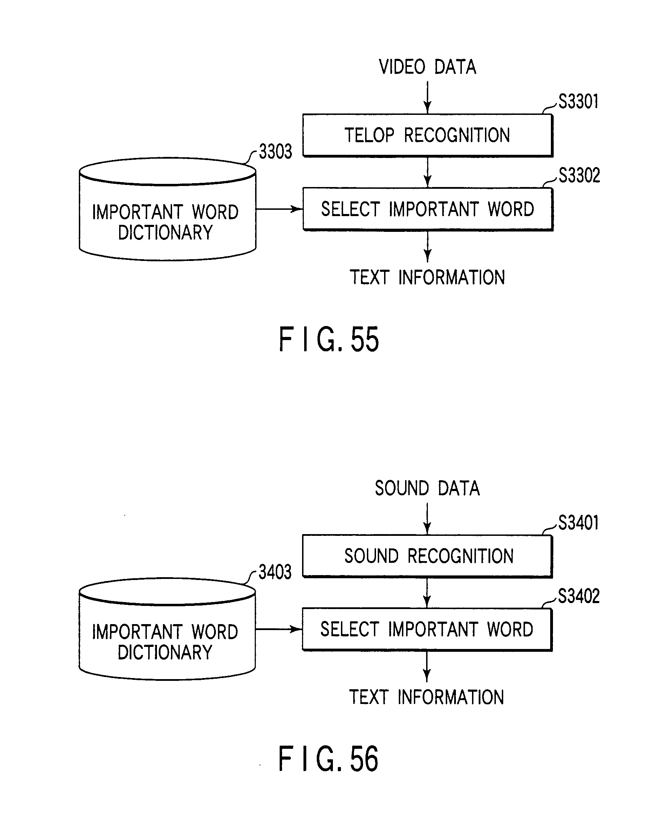

FIG. 55 shows one example of a procedure in which text information is obtained from the telop. FIG. 55 is also established as a function block diagram.

In the processing of FIG. 55, the text information is obtained from the telop or the sound displayed in the video.

At step S3301, the telop displayed in the video is read. This includes a method in which the telop in the original video is automatically extracted or the telop is read by man to be manually input with a method or the like described in, for example, a method described in a literature such as "A method for extracting the character portion from the video for the telop region" by Osamu Hori, CVIMI 114-17, pp. 129-136 (1999).

A step S3302, important words are taken out from the telop character string which has been read. In the judgment of important words, an important word dictionary 3303 is used. The telop character string which is read may be text information as it is. Extracted words are arranged, and a sentence representing the video frame section may be constituted with only the important words to provide text information.

FIG. 56 shows one example for obtaining the text information from the sound. FIG. 56 is also established as a function block diagram.

In the sound recognition processing at step S3401, sound is recognized.

At step S3402, important words are taken out from the recognized sound data. In the judgment of important words, an important word dictionary 3403 is used. The recognized sound data may be used as test information. Extracted words are arranged, and a sentence is constituted which represents the video frame section with only the important words to provide text information.

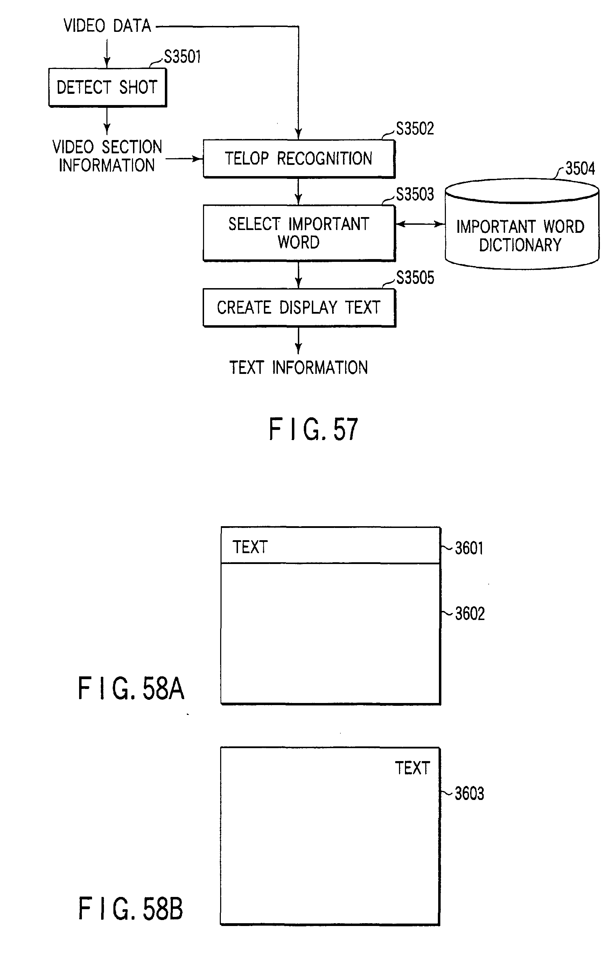

FIG. 57 shows an example of processing procedure for taking out text information and preparing the text information with telop recognition from the shot or from the video frame section having high importance. FIG. 57 is also established as a function block diagram.

At step S3501, the shot is detected from the video. Instead of the shot, the section having high importance may be determined.

At step S3502, the telop represented in the video frame section is recognized.

At step S3503, the important words are extracted by using an important word dictionary 3504.

At step S3505, text for the display is created. For this purpose, a telop character string including important words may be used. Only important words or a character string using the important words may be used as text information. If text information is obtained by sound recognition, the telop recognition processing at step S3502 is subjected to sound recognition processing to input sound data. The text information is displayed together with the video frame in which the text is displayed as telop or video frame of the time at which the data is reproduced as sound. Otherwise, text information in the video frame section may be displayed at one time.

FIGS. 58A and 58B are views showing a display example of the text information. As shown in FIG. 58A, the display may be divided into the text information display area 3601 and the video display area 3602. As shown in FIG. 58B, the text information may be overlapped with the video display area 3603.

Respective display times (reproduction times) of the video frame, the sound information and the text information may be adjusted so that all the media information is synchronized. For example, at the time of the double speed reproduction of the video, important sounds are extracted by the above method, and a half time sound information of the normal reproduction is obtained. Next, the display time is allocated to the video frame associated with respective sounds. If the display time of the video frame is determined so that the scene change quantity becomes constant, the sound reproduction time or the text display time is set to be within the display time of the respectively associated video frames. Otherwise, a section including a plurality of video frames is determined like the shot, so that the sound or the text included in the section is determined or displayed in accordance with the display time of the section.

So far there has been explained video data as its main focus. However, the data structure of the present invention can be modified to a data having no frame information, i.e., the sound data. It is possible to use sound information and text information in the form without the frame information. In this case, a summary is created which comprises only sound information or text information with respect to the original video data. In addition, a summary can be created which comprises only sound information and text information with respect to the sound data and music data.

Though the data structures shown in FIGS. 50 and 51 are used to describe the sound information and text information in synchronization with the video data, it is possible to summarize the sound data and text data only. To summarize the sound data, the data structure shown in FIG. 50 can be used irrespective of the video information. To summarize the text data, the data structure shown in FIG. 51 can be used irrespective of the video information. At that time, in the same manner as in the case of the frame information, the original data information may be added to describe a correspondence relationship between the original sound and music data to the sound information and text information.

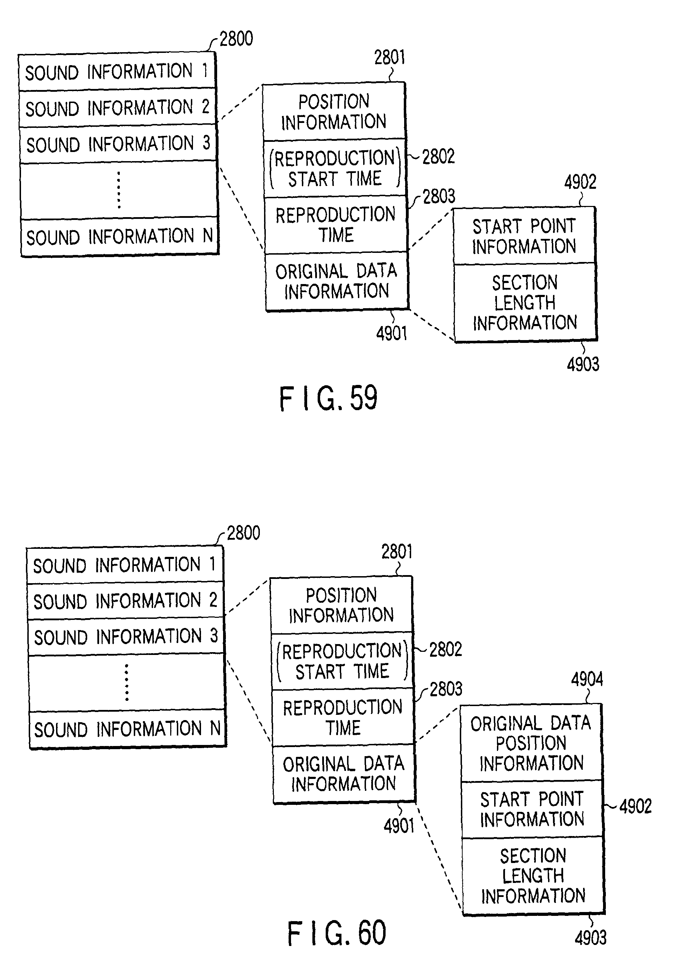

FIG. 59 shows an example of a data structure in which the original data information 4901 is included in the sound information shown in FIG. 50. If the original data is the video, the original data information 4901 indicates the section of video frames (start point information 4902 and section length information 4903).

If the original data is sound data and music data, the original data information 4901 indicates the section of sound and music.

FIG. 60 shows an example of a data structure in which the original data information 4901 is included in the sound information shown in FIG. 30.

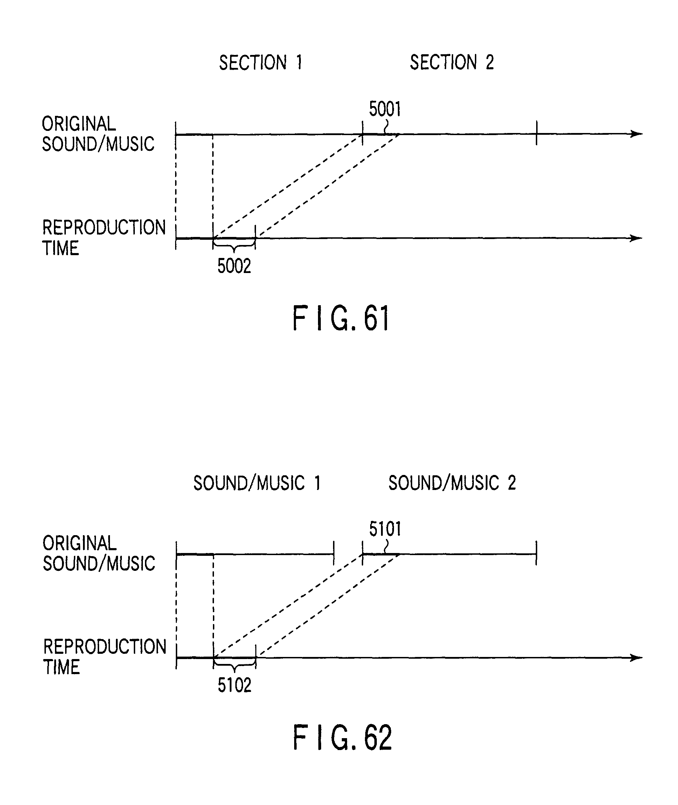

FIG. 61 explains an example in which sound/music is summarized by using the sound information. The original sound/music is divided into several sections. A portion of the section is extracted as the summarized sound/music so that the summary of the original data is created. For example, a portion 5001 of the section 2 is extracted as summarized sound/music to be reproduced as a section 5002 of the summary. As an example of a method for dividing the section, the music may be divided into chapters and the conversation may be divided by the contents.

Furthermore, in the same manner as in the case of the frame information, the description of the original data file and the section are included in the sound information and the text information with the result that a plurality of sound/music data items can be summarized together. At this time, if identification information is added to the individual original data, the original data identification information may be described in place of the original data file and the section.

FIG. 62 explains an example in which sound/music is summarized by using the sound information. Portions of plural sound/music data items are extracted as the summarized sound/music so that the summary of the original data is created. For example, a portion 5001 of the sound/music data item 2 is extracted as summarized sound/music to be reproduced as a section 5102 of the summary. A piece of music included in one music album is extracted by a portion of the section, so that a summarized data for trial can be created as a usage.

If an album is summarized, the title of the music may be included in the music information when it is preferable that the title of the music can be known. This information is not indispensable.

Next, a method of providing video data will be explained.

If the special reproduction control information created in the processing of the embodiment is provided for the use, it is necessary to provide the special reproduction control information from the side of those who create the information to the side of the user with some means. As this method of providing the special reproduction control information, various forms can be considered as exemplified below:
(1) Video data and special reproduction control information are recorded on one (or a plurality of) recording medium (or media) and provided at the same time;
(2) Video data is recorded on one (or a plurality of) recording medium (or media) and provided, and the special reproduction control information is separately recorded on one (or a plurality of) recording medium (media) and provided;
(3) Video data and the special reproduction control information are provided via the communication medium at the same occasion;
(4) Video data and the special reproduction control information are provided via the communication media at different occasions.

According to the above described embodiments, a special reproduction control information describing method for describing special reproduction control information provided for special reproduction with respect to the video contents describes, as the frame information, for each of frames or groups of continuous or adjacent frames selectively extracted from the whole frame series of video data constituting the video contents, first information showing a location at which video data of the one frame or one group is present and second information associated with display time allocated to the one frame or the frame group, and/or third information showing importance allocated to the one frame or the frame group corresponding to the frame information.

According to the above described embodiments, a computer readable recording medium storing a special reproduction control information stores at least frame information described for each of frames or groups of continuous or adjacent frames selectively extracted from the whole frame series of video data constituting the video contents, the frame information comprising first information showing a location at which video data of the one frame or one group is present and second information associated with display time allocated to the one frame or the frame group, and/or third information showing importance allocated to the one frame or the frame group corresponding to the frame information.

According to the above described embodiments, a special reproduction control information describing apparatus/method for describing special reproduction control information provided for special reproduction with respect to the video contents describes, as the frame information, for each of frames or groups of continuous or adjacent frames selectively extracted from the whole frame series of video data constituting the video contents, video location information showing a location at which video data of the one frame or one group is present and display time control information including display time information and basic information based on which the display time is calculated, to be allocated to the one frame or the frame group.

According to the above described embodiments, a special reproduction apparatus/method which enables a special reproduction with respect to video contents, wherein special reproduction control information is referred to which includes at least frame information including video location information showing a location at which one frame data or one frame group data is present which information is described for each of the frame groups comprising one frame selectively extracted out of the whole frame series of the video data allocated to the video contents and constituting the video contents or a plurality of continuous or adjacent frames; the one frame data or the frame group data corresponding to each frame information is obtained on the basis of video location information included in the frame information while the display time which should be allocated to each frame information is determined on the basis of display time control information included in at least each frame information and data on the one frame or the plurality of frames which is or are obtained is reproduced at the determined display time in a predetermined order thereby carrying out a special reproduction.

In the above described embodiments, for example, image data is created in advance, which is extracted in frame units from location information on an effective video frame or an original video which is used for display, and the video frame location information or information on the display time of the image data is created separately from the original video. Either video frames or the image data extracted from the original video is continuously displayed on the basis of the display information so that a special reproduction such as a double speed reproduction, a trick reproduction, jump continuous reproduction or the like is enabled.

In the double speed reproduction for confirming the contents at a high speed, display time is determined in advance in such a manner that the display time is extended at a location where a motion of the scene is large while the display time is shortened at a location where the motion is small so that the change in the display screen becomes constant as much as possible. Alternatively, the same effect can be obtained even when the location information is determined so that an interval of the extracted location is made small at a location where a motion of the video frame or video data used for the display is large while the interval is made small at a location where the motion is large. A reproduction speed control value may be created so that a double speed value or a reproduction time is provided which is designated by a user as a whole. A long video can be viewed at double speed reproduction, so that the video can be easily viewed in a short time, and the contents can be grasped in a short time.

It is possible to reproduce videos so that important locations are not overlooked by extending the display time at the important locations and shortening the display time at unimportant locations in accordance with the importance of the video.

Only important locations may be efficiently reproduced by partially omitting a part of the video without displaying the whole video frame.

According to embodiments of the present invention, an effective special reproduction is enabled on the basis of the control information on the reproduction side by arranging and describing as control information provided for a special reproduction of the video contents a plurality of frame information including a method for obtaining a frame or a group of frames selectively extracted from the original video, information on the display time (absolute or relative value) allocated to the frame or the group of frames and information which forms the basis for obtaining the information on the display time.

For example, each of the above functions can be realized as software. The above embodiments can be realized as a computer readable recording medium on which a program is recorded for allowing the computer to conduct predetermined means or for allowing the computer to function as predetermined means, or for allowing the computer to realize a predetermined function.

The structures shown in each of the embodiments are one example, and are not intended to exclude other structures. It is also possible to provide a structure which is obtained by replacing a part of the structure exemplified above with another structure, omitting a part of the exemplified structure, adding a different function to the exemplified structure, and combining such measures. A different structure logically equivalent to the exemplified structure, a different structure including a part logically equivalent to the exemplified structure, and a different structure logically equivalent to the essential portion of the exemplified structure can be provided. Another structure identical to or similar to the exemplified structure, or a different structure having the same effect as the exemplified structure or a similar effect can be provided.

In each of the embodiments, various variations with respect to various structure components can be put into practice in an appropriate combination.

Each of the embodiments includes or inherently contains an invention associated with various viewpoints, stages, concept or a category such as, for example, an invention as a method for describing information, an invention as information which is described, an invention as an apparatus or a method corresponding thereto, an invention as an inside of the apparatus or a method corresponding thereto.

Consequently, the invention can be extracted without being limited to the exemplified structure from the content disclosed in the embodiment according to this invention.

## Claims

1. A method of describing frame information, the method **characterized by** comprising:
describing, for a frame extracted from a plurality of frames in a source video data, first information (101) specifying a location of the extracted frame in the source video data; and
describing, for the extracted frame, second information (102) relating to a display time of the extracted frame.

2. The method according to claim 1, **characterized in that** the extracted frame comprises a group of frames, and the first information comprises information specifying a location of the extracted group of frames in the source video data.

3. The method according to claim 1 or 2, **characterized by** further comprising describing, for the extracted frame, third information (122) relating to importance of the extracted frame.

4. The method according to claim 1, 2 or 3, **characterized in that** the first information comprises information specifying an image data file created from the video data of the extracted frame.

5. The method according to claim 1, **characterized in that** the extracted frame comprises a frame extracted from a plurality of frames included in a temporal section of the source video data, and further describing fourth information specifying the temporal section of the source video data.

6. The method according to claim 5, **characterized in that** the first information comprises information specifying an image data file created from the source video data of the extracted frame, the image data corresponding to the extracted frame.

7. The method according to any one of the preceding claims, **characterized in that** the second information comprises information relating to such display time that a frame activity value during a special reproduction is kept substantially constant.

8. The method according to any one of the preceding claims, **characterized by** further comprising describing fifth information (123) indicating whether the extracted frame is reproduced or not.

9. The method according to claim 1, **characterized**
**in that** the first information comprises one of information specifying a location of the extracted frame among the plurality of frames and information specifying a location of image data within an image data file created from the source video data and stored separately from the video data, the image data corresponding to the extracted frame.

10. The method according to any one of the preceding claims, **characterized by** further comprising describing, for media data other than the source video data including the extracted frame, information specifying a location of the media data and information relating to a display time of the media data.

11. An article of manufacture comprising a computer usable medium storing frame information, the frame information **characterized by** comprising:
first information (101), described for a frame extracted from a plurality of frames, specifying a location of the extracted frame in the source video data; and
second information (102), described for the extracted frame, relating to a display time of the extracted frame.

12. The article of manufacture according to claim 11, **characterized in that** the extracted frame comprises a group of frames, and the first information comprises information specifying a location of the extracted group of frames in the source video data.

13. The article of manufacture according to claim 11 or 12, **characterized in that** the frame information comprises third information (122) relating to importance of the extracted frame.

14. The article of manufacture according to claim 11, 12 or 13, **characterized in that** the first information comprises information specifying an image data file created from the video data of the extracted frame.

15. The article of manufacture according to claim 11, **characterized by** further comprising storing the source video data and an image data file corresponding to the source video data of the extracted frame in addition to the frame information.

16. An apparatus for creating frame information, the apparatus **characterized by** comprising:
a unit configured to extract a frame from a plurality of frames in a source video data;
a unit configured to create the frame information including first information specifying a location of the extracted frame and second information relating to a display time of the extracted frame; and
a unit configured to link the extracted frame to the frame information.

17. A method of creating frame information, the method **characterized by** comprising:
extracting a frame from a plurality of frames in a source video data; and
creating the frame information including first information specifying a location of the extracted frame in the source video data and second information relating to a display time of the extracted frame.

18. An apparatus for performing a special reproduction, **characterized by** comprising:
a unit configured to refer to frame information described for a frame extracted from a plurality of frames in a source video data and including first information specifying a location of the extracted frame in the source video data and second information relating to a display time of the extracted frame;
a unit configured to obtain the video data corresponding to the extracted frame based on the first information;
a unit configured to determine the display time of the extracted frame based on the second information; and
a unit configured to display the obtained video data for the determined display time.

19. A method of performing a special reproduction **characterized by** comprising:
referring to frame information described for a frame extracted from a plurality of frames in a source video data and including first information (101) specifying a location of the extracted frame and second information (102) relating to a display time of the extracted frame;
obtaining the video data corresponding to the extracted frame based on the first information;
determining the display time of the extracted frame based on the second information; and
displaying the obtained video data for the determined display time.

20. An article of manufacture comprising a computer usable medium having computer readable program code means embodied therein, the computer readable program code means performing a special reproduction, the computer readable program code means **characterized by** comprising:
computer readable program code means for causing a computer to refer to frame information described for a frame extracted from a plurality of frames in a source video data and including first information (101) specifying a location of the extracted frame and second information (102) relating to a display time of the extracted frame;
computer readable program code means for causing a computer to obtain the video data corresponding to the extracted frame based on the first information;
computer readable program code means for causing a computer to determine the display time of the extracted frame based on the second information; and
computer readable program code means for causing a computer to display the obtained video data for the determined display time.

21. A method of describing sound information, the method **characterized by** comprising:
describing, for a frame extracted from a plurality of sound frames in a source sound data, first information specifying a location of the extracted frame in the source sound data; and
describing, for the extracted frame, second information relating to a reproduction start time and reproduction time of the sound data of the extracted frame.

22. An article of manufacture comprising a computer usable medium storing frame information, the frame information **characterized by** comprising:
first information, described for a frame extracted from a plurality of sound frames, specifying a location of the extracted frame in the source sound data; and
second information, described for the extracted frame, relating to a reproduction start time and reproduction time of the sound data of the extracted frame.

23. A method of describing text information, the method **characterized by** comprising:
describing, for a frame extracted from a plurality of text frames in a source text data, first information specifying a location of the extracted frame in the source text data; and
describing, for the extracted frame, second information relating to a display start time and display time of the text data of the extracted frame.

24. An article of manufacture comprising a computer usable medium storing frame information, the frame information **characterized by** comprising:
first information, described for a frame extracted from a plurality of text frames in a source text data, specifying a location of the extracted frame in the source text data; and
second information, described for the extracted frame, relating to a display start time and display time of the text data of the extracted frame.

25. A carrier medium carrying computer readable instructions for controlling the computer to carry out the method of any one claims 1 to 10, 17, 19, 21 and 23.
